# EUROPEAN PATENT SPECIFICATION

(11) **EP 1 267 518 B1**
(45) Date of publication and mention of the grant of the patent: **17.08.2005**
(21) Application number: 02012442.6
(22) Date of filing: 10.06.2002
(51) Int. Cl.: H04L 12/24

(54) **Multiple device management method and system**
Verfahren und Vorrichtung zum Verwalten von mehreren Netzwerkgeräten
Procédé et système pour la gestion de multiples dispositifs de réseau

(30) Priority: 11.06.2001 US 297473 P; 14.02.2002 US 75633
(43) Date of publication of application: 18.12.2002
(73) Proprietor: MICROSOFT CORPORATION, Redmond, WA 98052 (US)
(72) Inventor: Sutton, Paul C., Seattle, Washington 98122 (US); Steeb, Curt A., Redmond, Washington 98052 (US); Wang, Gang, Issaquah, Washington 98029 (US); Holladay, Marin L., Bremerton, Washington 98311 (US); Xu, Zeyong, Issaquah, Washington 98029 (US)
(74) Representative: Grünecker, Kinkeldey, Stockmair & Schwanhäusser Anwaltssozietät

(56) References cited:
- WO-A-98/09402
- WO-A-99/18695
- US-B1- 6 220 768

## Description

### BACKGROUND OF THE INVENTION

Data centers provide computing resources for many types of organizations, including enterprises and various Internet-related service providers, such as storage service providers, hosting service providers and application service providers. A typical data center contains anywhere from hundreds to many thousands of computers, performing a variety of roles for a variety of purposes.

Managing a large number of computers can be costly, time consuming, and error-prone. For example, many service providers find that running a data center is a labor-intensive business, as many routine processes are performed manually. By way of example, bringing a new server online for a new customer consists of having an engineer print-out the new customer's order, install an operating system, install any applications, configure the operating system and applications, and move the server machine into the data center to attach to the network and to a power source. Bringing a new server online is thus a lengthy and expensive process, and prone to error.

Similar manual processes are used when an existing server configuration is to be "reprovisioned" for a new customer via software. In fact, the cost of reprovisioning is so great that some service providers find it cheaper to not do so. Part of the expense is that such unused systems can normally only be located via an expensive manual audit of the data center. Similarly, rather than redeploying a computer that is no longer needed, it may be cheaper leave the server computer in the data center (running and consuming power), or completely disassemble the computer, rather than attempt redeployment.

In sum, running a data center requires making a number of compromises that are necessary for practical purposes but are not very desirable. For example, instead of redeploying computers, it may be cheaper not to, but this means that data centers have computer systems up and running (using power, air conditioning and network ports) even when they are no longer required for service.

As another example, although expensive, manually configuring various servers is still the way in which data centers operate. However, reducing such costs through automation is a significant undertaking that has heretofore not been very successful, as among other difficulties, such an attempt requires integration with multiple external products.

WO-A-98 09402 relates to a method of managing a plurality of computer workstations interconnected by a network. Managing the workstations is seen as one of updating (reading from or writing to) database entries and as a consequence from/to the real workstation agents. The mass of nodes is broken down into groups and the groups are managed as if they were individual workstations. That is, an update to a group of (for example) parameter 5 on a group will cause the management system to send an update order to all nodes contained in that group, for an update to parameter 5. In order to define which groupings are significant and to define which of the nodes should belong to which groups, a network administrator decides on the group membership conditions and configures his management station accordingly. This is then compiled into scripts or programs which are sent to all workstation agents on the network. The decisions for group membership are taken by each workstation itself and independently of any others. At each workstation, on receiving a new group definition, the local agent will add it to his list of active group conditions and periodically will check the workstation to see if any changes have taken place which affect the membership conditions. The rate at which this checking (polling) takes place is given by the script, since some conditions are more dynamic than others. Whenever a change is detected which affects the membership of one or more defined groups, the agent causes a trap message to be sent to the management station to signal this event. The management database contains a data record for each of the devices which are to be found on the network. The trap is used to update the database entries for each group and may also generate an alarm condition for the administrator.

US-B1-6,220,768 relates to an asset discovery system for collecting equipment and configuration information in a network. Typically, the network includes three levels of hierarchy, the network itself, a plurality of subnets, and nodes of each subnet. The input to the asset discovery system includes a list of subnets of the network to be surveyed with the netmask for each subnet. Further input may include network user IDs, passwords, and SNMP (Simple Network Management Protocol) community names for the network. The asset discovery system performs network survey tasks. A typical step in the surveying process is to invoke a service to send a message directed to a particular address via the network. The service receives a reply to the message including node equipment or configuration information. The asset discovery system extracts this information from the reply and the message exchange is repeated for each IP address in the range or ranges to be surveyed. The extracted information is stored in an assets database. The assets database characterizes a current configuration of assets at the nodes generating the replies. Further, a method for remote software installation is provided. A first node in a network installs a software package on a second node in the network. Installation is accomplished by retrieving identifying information and using that information to select the proper software package to install. Once a software package has been selected for installation, a copy of the software package is transferred to the second network node. This also includes the action of installing the software package on the second node. The software package selected will usually include a configuration file. This configuration file will include information needed to properly install the software package.

### SUMMARY OF THE INVENTION

It is the object of the present invention to reduce the processing and/or storing load on the node computers needed for checking which node computers belong to which group. This is accomplished by the invention as defined in the independent claims. Embodiments are given in the dependent claims.

Briefly, the present invention provides a multiple device management method and system, that among other things, provides a mechanism to execute a single command on one controller computer to initiate an action (operation) on one or more other controlled computers referred to as nodes. An operation may comprise the execution of a scripted set of commands, execution of a binary program, or a number of other types of operations. The mechanism works with sets of computers as if they were a single computer, whereby, for example, management of computing devices is greatly simplified, and the cost of managing computing devices in a data center is significantly reduced.

In one implementation, the present invention provides an architecture comprising a controller (e.g., a process or the like) on one computer that manages multiple other computers, each of which contains agent software allowing it to be managed by the controller. In general, the controller provides a central representation of the multiple nodes managed thereby, from which actions can be initiated against the nodes, which may be selected individually or by sets to which the nodes may be assigned. The controller communicates with the nodes using a messaging format, such as one derived from XML (extensible Markup Language), using a replaceable underlying transport layer for network communication.

The controller provides a defined way to represent the available nodes in the data center, their organization into sets, and the results of ongoing and completed operations. For example, a schema is used to persist the representation of the available nodes, and sets of nodes (e.g., as grouped together by an administrator typically according to some criterion, such as administrative convenience, operational purposes or other criteria). The schema may also be used to store a record of the results of each action on a storage device accessible to the controller, along with pending and performed operations, and jobs.

Other advantages will become apparent from the following detailed description when taken in conjunction with the drawings, in which:

### BRIEF DESCRIPTION OF THE DRAWINGS

FIGURE 1 is a block diagram representing a computer system into which the present invention may be incorporated;
FIG. 2 is a block diagram representing a controller computer connected to a network for managing a plurality of nodes in accordance with an aspect of the present invention;
FIG. 3 is a block diagram representing various exemplary components in the controller computer and in one of the nodes managed thereby in accordance with an aspect of the present invention;
FIGS. 4A-4I represent a suitable defined schema for persisting the representation of available nodes, sets, operations and/or jobs and so forth, in accordance with an aspect of the present invention;
FIG. 5 is a flow diagram describing general logic for performing an operation on one or more selected nodes in accordance with an aspect of the present invention;
FIG. 6 is a flow diagram describing general logic for performing requested actions on a node in accordance with an aspect of the present invention; and
FIG. 7 is a flow diagram generally representing results of an operation being obtained, and a user interface, script or process that initiated an operation on the controller determining the results of an operation in accordance with an aspect of the present invention.

### DETAILED DESCRIPTION OF THE PREFERRED EMBODIMENT

### Exemplary Operating Environment

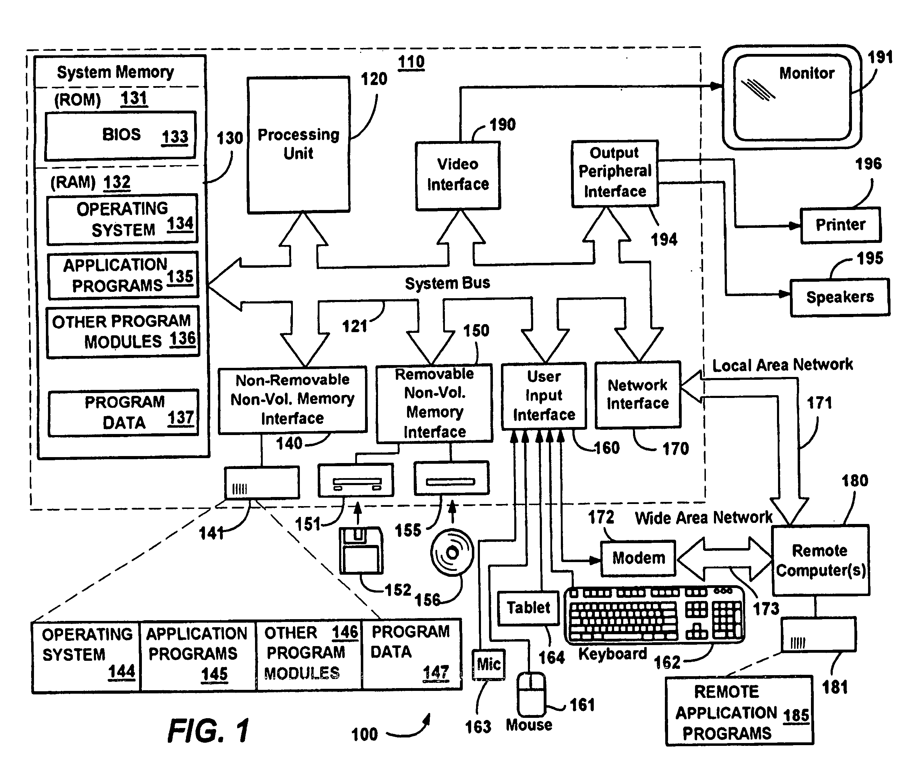

FIGURE 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to: personal computers, server computers, hand-held or laptop devices, tablet devices, multiprocessor systems, microprocessor-based systems, set top boxes, programmable consumer electronics, network PCs, minicomputers, mainframe computers, routers, distributed computing environments that include any of the above systems or devices, and the like.

The invention may be described in the general context of computer-executable instructions, such as program modules, being executed by a computer. Generally, program modules include routines, programs, objects, components, data structures, and so forth, that perform particular tasks or implement particular abstract data types. The invention is generally intended to be practiced in distributed computing environments where tasks are performed by remote processing devices that are linked through a communications network. In a distributed computing environment, program modules may be located in local and/or remote computer storage media including memory storage devices.

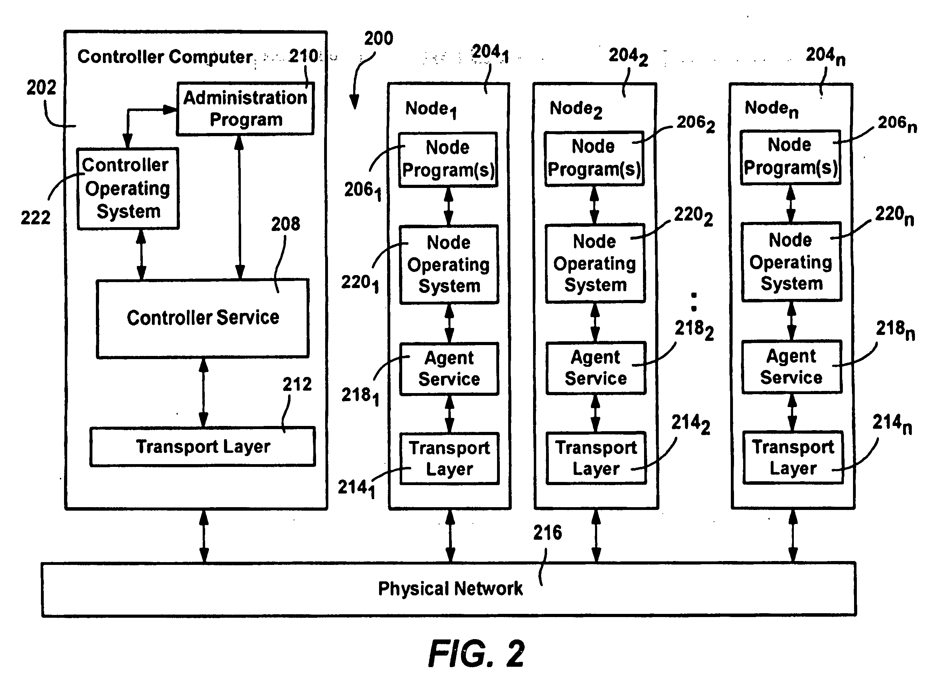

With reference to FIG. 1, an exemplary system for implementing the invention includes a general purpose computing device in the form of a computer 110, which may act as a controller computer 210 of FIG 2 for controlling nodes. Components of the computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 110 typically includes a variety of computer-readable media. Computer-readable media can be any available media that can be accessed by the computer 110 and includes both volatile and nonvolatile media, and removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by the computer 110. Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136 and program data 137.

The computer 110 may also.include other removable/non-removable, volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media, discussed above and illustrated in FIG. 1, provide storage of computer-readable instructions, data structures, program modules and other data for the computer 110. In FIG. 1, for example, hard disk drive 141 is illustrated as storing operating system 144, application programs 145, other program modules 146 and program data 147. Note that these components can either be the same as or different from operating system 134, application programs 135, other program modules 136, and program data 137. Operating system 144, application programs 145, other program modules 146, and program data 147 are given different numbers herein to illustrate that, at a minimum, they are different copies. A user may enter commands and information into the computer 20 through input devices such as a tablet, or electronic digitizer, 164, a microphone 163, a keyboard 162 and pointing device 161, commonly referred to as mouse, trackball or touch pad. Other input devices not shown in FIG. 1 may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. The monitor 191 may also be integrated with a touch-screen panel or the like. Note that the monitor and/or touch screen panel can be physically coupled to a housing in which the computing device 110 is incorporated, such as in a tablet-type personal computer. In addition, computers such as the computing device 110 may also include other peripheral output devices such as speakers 195 and printer 196, which may be connected through an output peripheral interface 194 or the like.

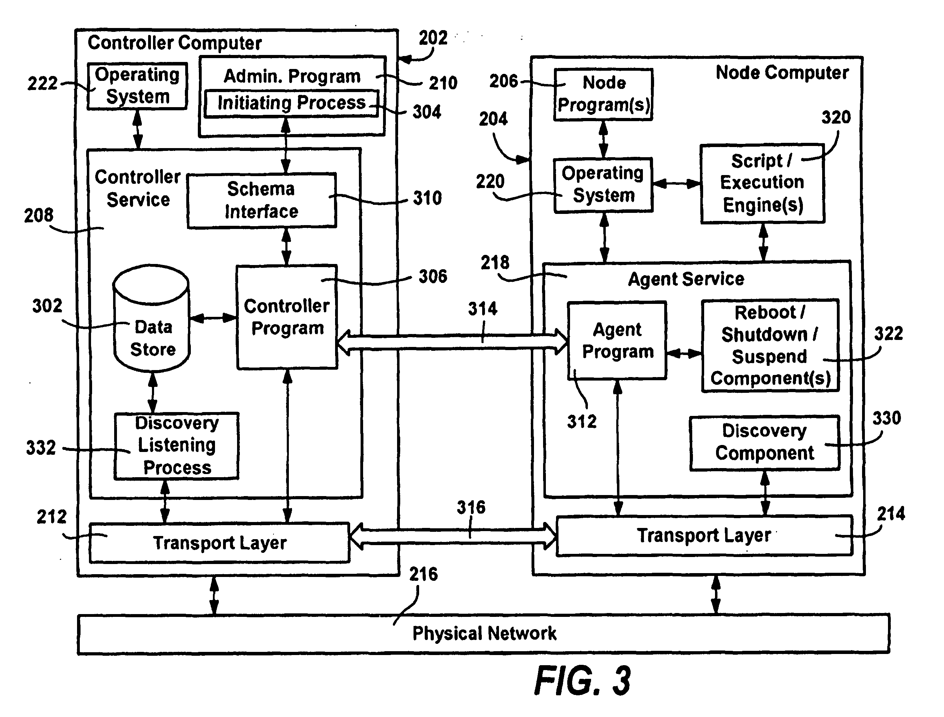

The computer 110 generally operates in a networked environment to control a number of remote server computers 180, alternatively referred to as a node 204 or nodes 204₁-204ₙ (FIGS. 2 and 3). Typically, such nodes comprise some or all of the components of the computer 110 as previously described. Nodes may not include user interface mechanisms such as a keyboard, mouse, display, and so forth. Such nodes can run a variety of programs which typically provide services for other computers within the networked environment or to users. Examples of such programs include programs for serving web pages or managing databases. By way of example, and not limitation, FIG. 1 illustrates remote application programs 185 as residing on memory device 181. It will be appreciated that the network connections shown are exemplary and other means of establishing a communications link between the computers may be used.

### MULTIPLE DEVICE MANAGEMENT

FIG. 2 comprises a block diagram generally representing an architecture 200 including a controller computer 202 (which may correspond to the computer system 110 of FIG. 1) and a plurality of managed computing devices referred to as nodes 204₁-204ₙ, (which may correspond to the remote computers 180 of FIG. 1). Note however, that while aspects of the present invention are suitable for use in data centers, such aspects are applicable in any environment where one or more tasks need to be performed on one or more computers. For example, a user having multiple computers and services (such as PDAs, mobile computers, desk top systems, home media center systems, and so on), may use the present invention to perform operations across such multiple devices. Thus, although generally described in a data center environment, the present invention should not be limited to any particular configuration or configurations, but rather contemplates usage with virtually any configuration of computing device such as those set forth above, as well as personal computers, servers, routers and various storage devices.

A typical data center comprises many different computers. To make managing the data center easier, an administrator or the like designates one of the computers as the controller computer 202, (or controller 202). Among other things, in keeping with one aspect of the present invention, the controller computer 202 maintains a master record of computers in the data center, how they are arranged, and what operations can be performed on them. The controller may store this data in a locally attached data store (e.g., as generally represented in FIG. 3), or on a remote data store. The nodes 204₁-204ₙ comprise computers in the data center that are capable of being managed by the controller 202. Nodes include node programs 206₁-206ₙ or the like that perform the actual work of the data center, such as serving web pages or managing databases.

In accordance with one aspect of the present invention, in order to work with hundreds or thousands of computers in a data center, the administrator applies a logical organization to the computers, that is, the administrator groups the various nodes 204₁-204ₙ into sets representing the nodes as logical structures instead of a flat list of all the nodes in the data center. There may be multiple such structures (sets) of computers for a single data center, e.g., grouped by customer or by function, and a node may belong to more than one set. The set information is stored by a controller service 208 or the like in a data store 302 (FIG. 3) maintained by the controller by placing the computers into named sets, e.g., in Unicode characters. Via sets, the administrator can work with logically organized groups of computers as if they were a single computer. Note that it is also feasible to group controllers together if multiple controllers are present in a data center.

To establish and maintain sets, an administration program 210 or the like comprising one or more applications, processes, threads, objects, and/or other software components enables an administrator to interact with the controller service 208, such as via one or more user interfaces. The administration program 210 allows an administrator to create a set, add a node to a set, remove a node from a set, delete a set, list the current nodes in a set, and list the sets to which a node belongs.

For example, data center administration may apply various conceptual structures to the arrangement of the node computers, such as one that corresponds with the physical layout, in which node computers are identified by their physical position in the data center (e.g., cage, rack and slot location). This view of the data center allows the administration to find the physical location of a node, if, for example, it needs to be replaced. Alternatively, a physical layout set allows the administration to specify the installation location of a newly purchased computer (node).

There are other ways of organizing nodes in a data center, including a logical structure that organizes the nodes by the customer that is using each node. This enables the administrator to map between a customer and the node or nodes currently being used by that customer, such as to track and monitor usage of a particular customer, or to apply a change to all that customer's nodes. Another logical way of viewing the data center is to organize the nodes by function, where function is the application running on the nodes. For example, particular nodes may be grouped together because they are web servers, media servers or databases. Viewing the data center by function enables the administration to perform certain actions (such as to apply a patch for a particular application) only on the nodes that require it. Note that these are only examples, as there are various other ways that data center administration may want to organize the nodes in their data center, e.g., by network topology (nodes attached to particular switches or load balancers), by VLANs, by customer service level, by machine capabilities, and/or by installed OS and service patch level. Note that any given node may be grouped in any number of sets, as set forth in the example table below:

| **Node** | **Member of these groups** |
|---|---|
| Node 1 | LB Web, Customer A |
| Node 2 | LB Web, Customer A |
| Node 3 | Database, Customer A |
| Node 4 | Web |
| Node 5 | Web, Customer B |
| Node 6 | None |

In keeping with this aspect of the present invention, the ability to group nodes into sets (e.g., distinguished by simple names) simplifies the performance of various operations. For example, a set may identify node computers in use by a customer when that customer reports an issue, so that the status of those node computers can be quickly assessed and the issue resolved. Monitoring information collected from the nodes may be aggregated for a particular customer, such as into a form viewable via a Web site such that the customer can access to see the status of their machines. Nodes may be monitored for resource exhaustion (e.g. running out of disk space), to generate an alert for the customer using that machine. The alert can be reported to the customer (for example, by email), and/or used by the sales staff to contact the customer and recommend that they upgrade their configuration, e.g., to better hardware or an additional server.

In accordance with another aspect of the present invention, to manage the data center, operations are performed against one or more nodes in the data center by initiating an operation on the controller service 208, such as via an initiating process 304. Note that in FIG. 3, the initiating process 304 is represented as part of the administration program 210, however as is understood, these may be separate from one another, and indeed, the initiating process may be a script or other executable code. Further, note that for simplicity, FIG. 3 shows only one node 204, however as is understood, the controller 202 can control multiple nodes, e.g., at once or in some series.

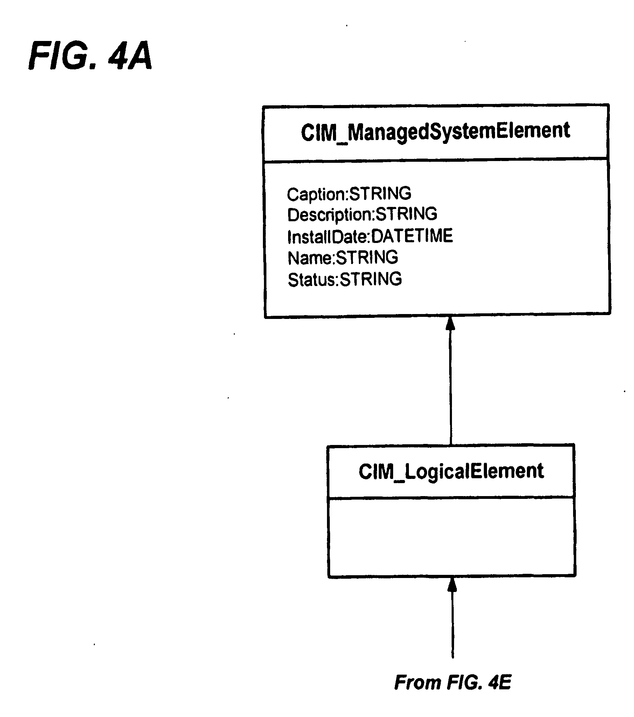

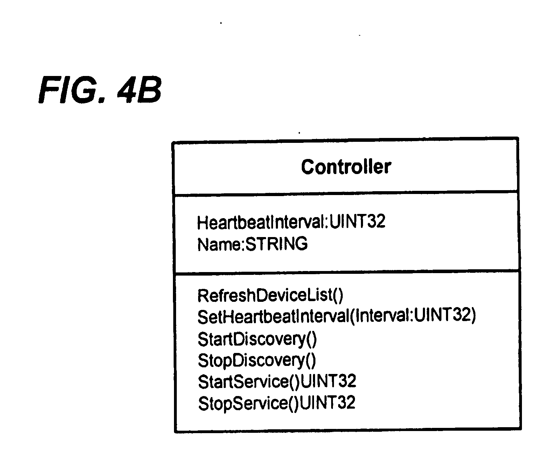

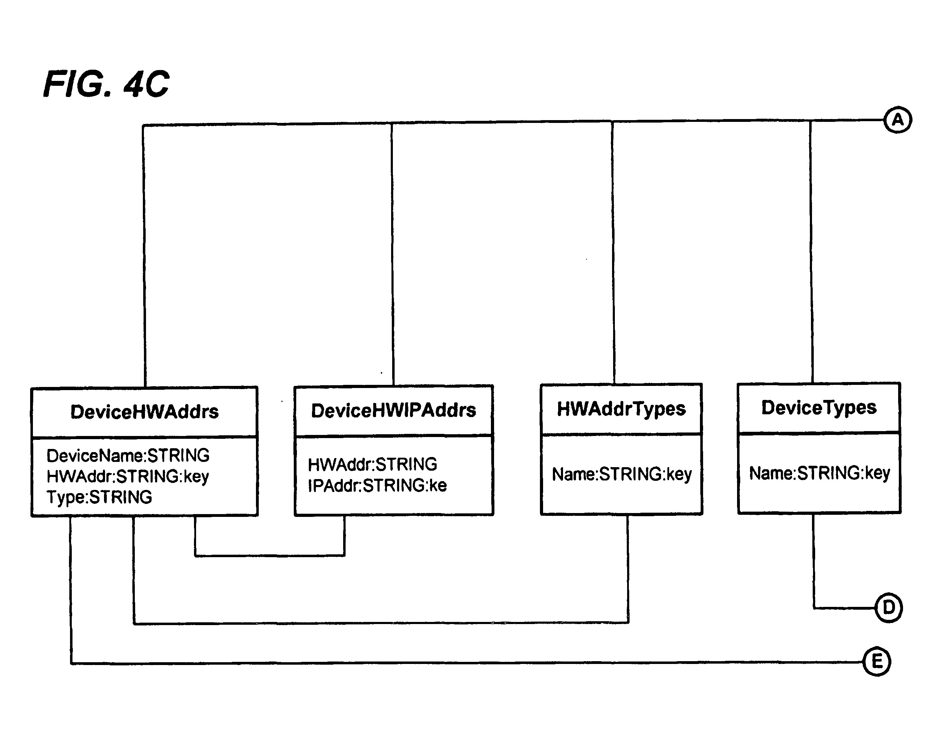

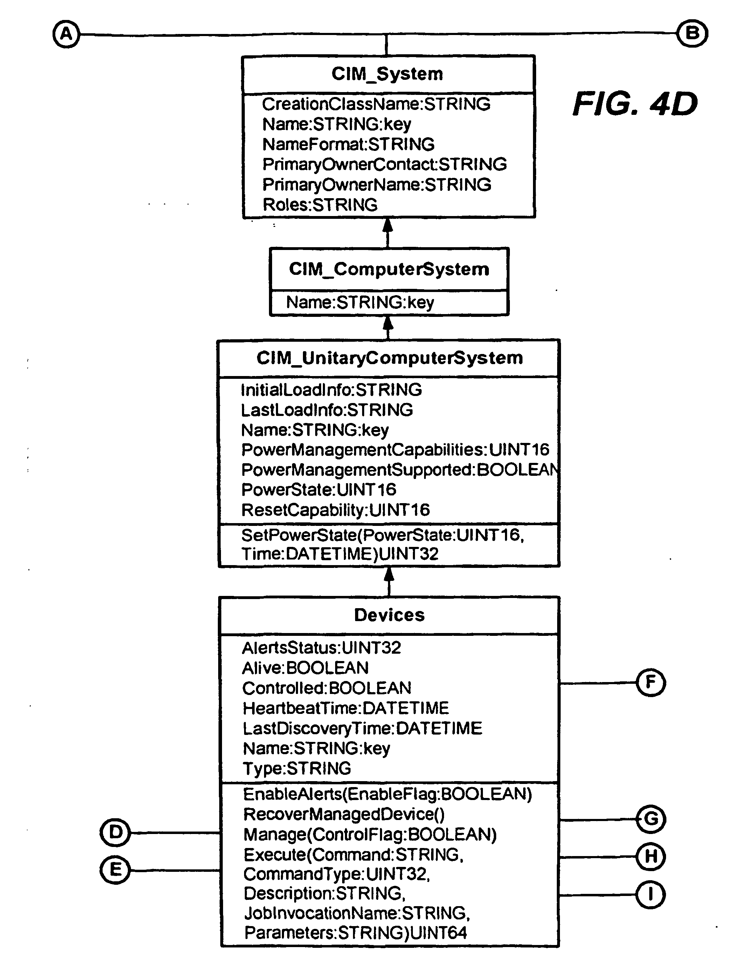

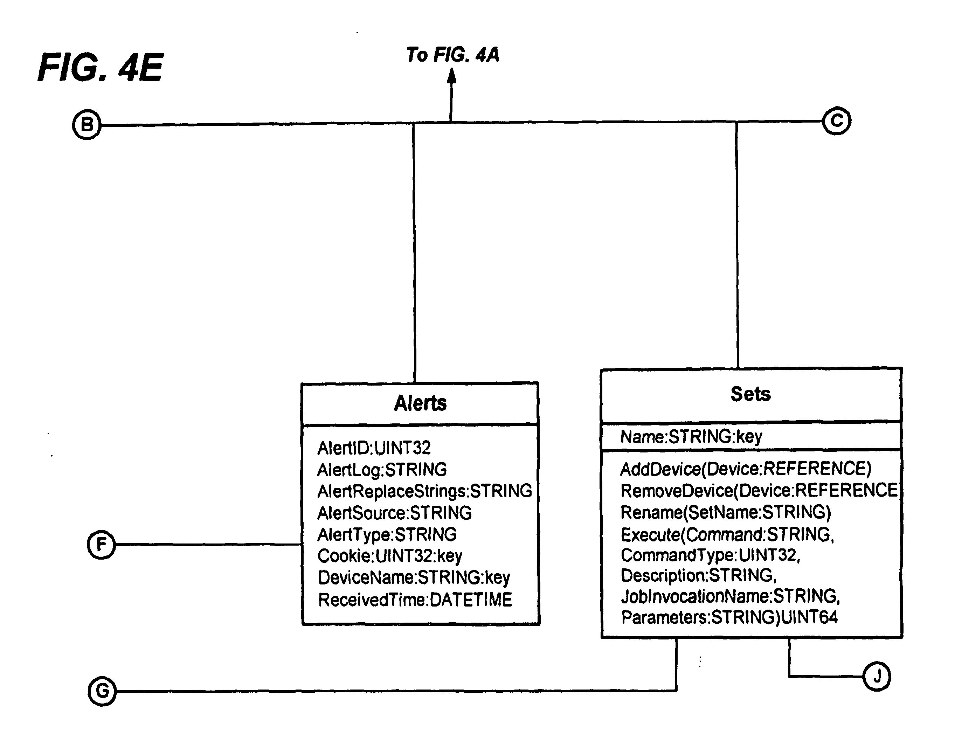

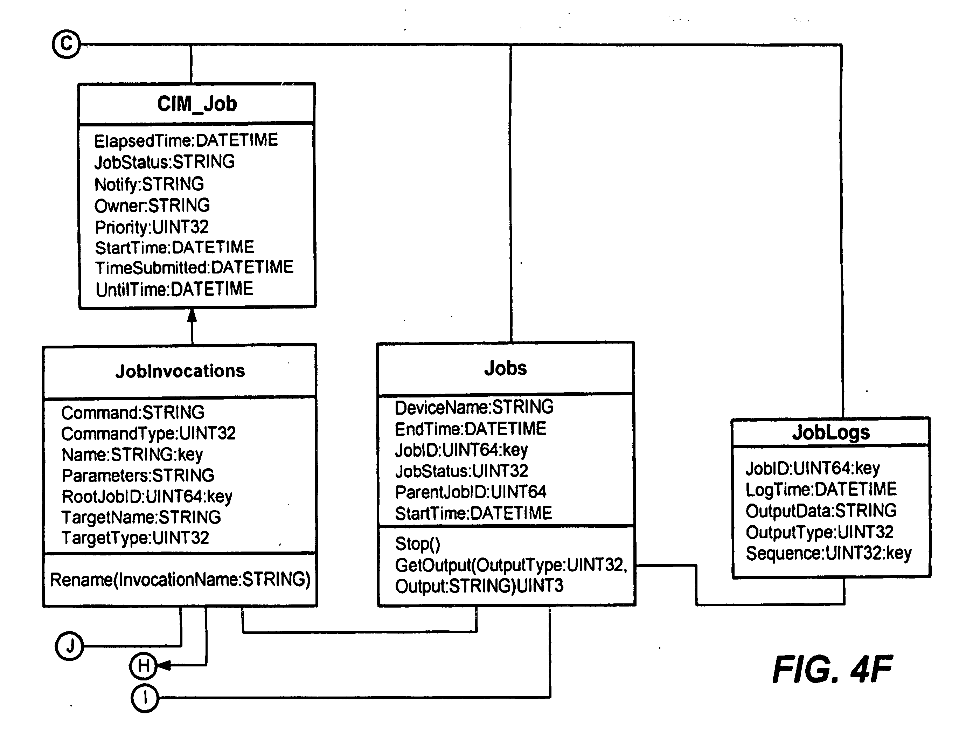

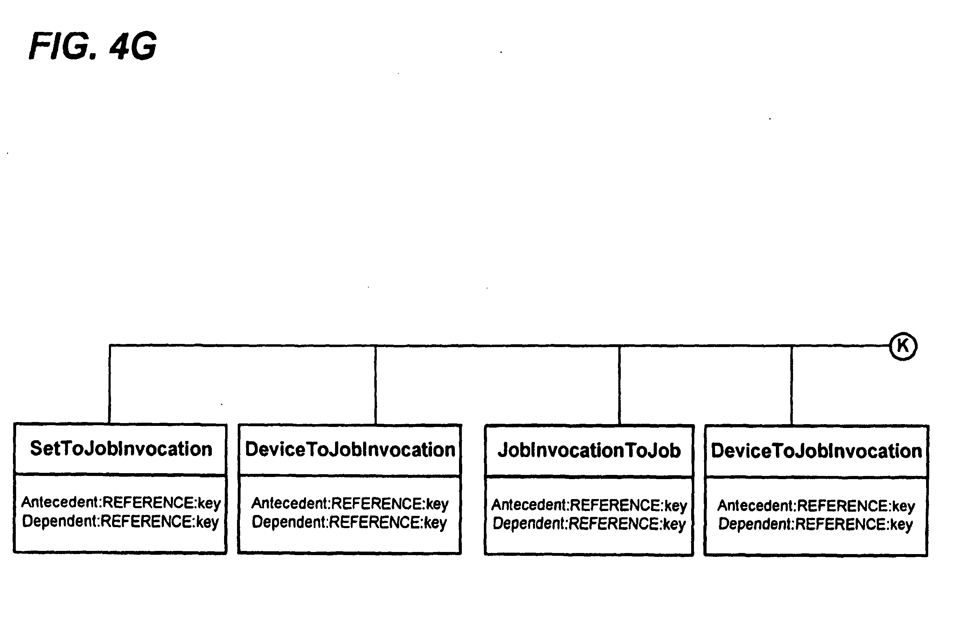

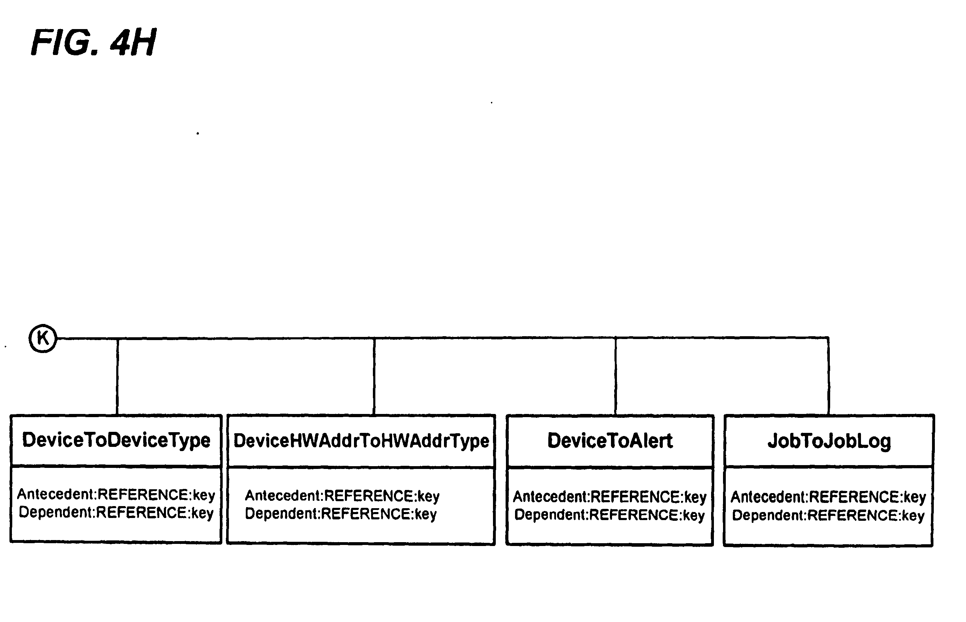

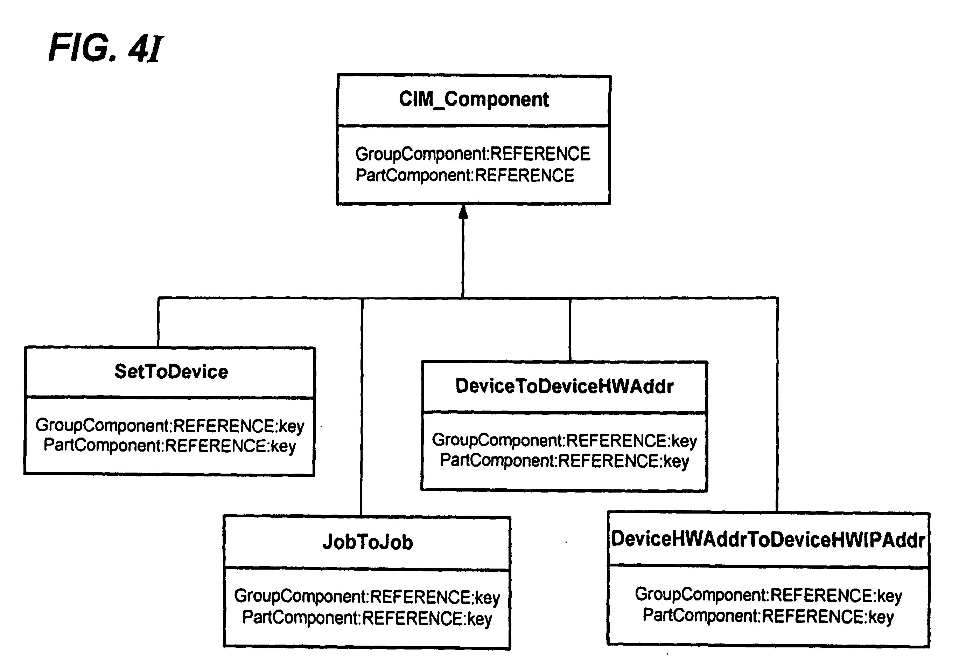

As generally represented in FIG. 3, on the controller computer 202, a controller program 306 of the controller service 204 is accessed and run through a schema interface 310. This schema (generally represented via FIGS. 4A-4I) provides representations of the available nodes in the data center, the sets, the available operations, and the results of running each operation. In general, on the controller computer 202, the controller service 208 can be considered as comprising the schema interface 310, the controller program 306 and the data store 302. Any process, script or user-interface that wants to access the controller service 208 does so through the schema interface 310. The controller program 306 determines the actions to take, which might involve accessing the data store 302, and/or communicating with one or more nodes (such as the node 204) via the transport layer 212. For example, the results data and other information needed to provide the administrator with the representations is generally maintained in the data store 302, which an administrator can access via the schema interface 310. In a typical implementation, the schema interface might be derived from the Common Information Model (CIM) standard for representing computing process and devices, such as described in United States Patent Application Serial No. 09/020,146, assigned to the assignee of the present invention.

In general, to perform an operation, one or more nodes, or sets of nodes, on which the operation is to be performed is first selected, such as via the administration program 210. A selection may specify a single computer, all the computers in a set, all the computers in several sets, or a mixture of individual computers and computers in sets. The selection may have any duplicates removed therefrom, e.g., if the same node is specified via two or more selected sets. Note that selections are different from sets in that a set is an administrator-chosen representation of an organization of the data center, whereas a selection is generally a collection of computers temporarily specified for performing at least one operation thereto. In other words, while set members (and sets themselves) may change over time, they are a persistent representation of the organization of the computer nodes, whereas selections are transient sets of computer nodes, representing the intended target of specific operations. A selection is created when there is a need to perform an operation or series of operations against a given assembled number of computers. Once the operation or series of operations is complete, the representation of the selection may be deleted without losing information about the organization of computers in the data center. Selections may be considered to be "temporary" sets. In some implementations, selections may be limited to the degenerate cases where a selection may only contain either a single set or a single node.

The specific operations that the administrator can perform (e.g., via the administration program 210) include creating a selection, deleting a selection, and listing the computers in a selection. In one implementation, selections are stored on the controller 202, and each selection is identified by a unique serial number allocated when the selection is created. Selections may support operations in data centers containing thousands of computers, and each selection can contain any number of computers, from one to the total number of members in the data center. A record is maintained to track which operations are run on which devices, thereby providing an audit of what was run. This audit is normally archived and cleared on a regular basis.

Note that in a data center environment, the controller 202 is the control point of (at least part of) the data center, and is the repository of information about the data center. As a result, in such an environment, the controller needs to be highly available and recoverable in case of disaster. For availability, the controller may comprise a shared-disk cluster environment of multiple clustered machines, in which some clustered computers may fail without affecting operation of the controller 202. For disaster recovery, the state of the controller may be backed up, including details of groups, scripts, script code, and results of previously completed and in-process jobs. A backup process may be documented and encapsulated into a script which the administrator or other service can use to regularly perform the backup. Following a backup, the controller state may need to be restored onto a new controller, and additionally, the new controller needs to be able to take control of the nodes previously controlled by the previous controller. At the same time, security may be provided such that a rogue controller cannot take control of nodes.

The scripts that can be executed on the nodes may be stored (e.g., in a script database in the data store 302 or elsewhere) on the controller 202. The scripts can be written to use any script host that is available on the target nodes. The script database comprises information about the scripts available to be executed on remote nodes, and the scripts themselves may be stored on the file-system of the controller, and the database contains the paths to the scripts. In one implementation, scripts may be located anywhere on the file-system of the controller. The administration program 210 or the like enables the creation or editing of a script on the file-system, creation of a script entry in the script database, editing of a script entry, deletion of a script entry, creation of a job (described below) that may use a script, deletion of a job, editing of a job, execution of a job, a retrieval of the status and results of a job.

In accordance with one aspect of the present invention, to perform an operation or series of operations on one or more selected nodes, once selection is accomplished, the controller service 208 creates a message (or messages) containing a job to be performed. The message is preferably formatted using XML, and is sent to each selected target node (e.g., the node 204 in FIG. 3) using a messaging protocol and transport layer protocol 212 on the controller and a corresponding protocol 214₁-214ₙ on each of the node or nodes specified in the selection. For simplicity, the controller program 306 can be considered as communicating directly with an agent service 218 including an agent program 312 on the node computer 204, using a defined XML messaging protocol 314 (FIG. 3), while the transport layer 212 on the controller 202 can be regarded as communicating directly with the transport layer 214 on the node 204 using a transport protocol 316 (FIG. 3). The transport layer 212 may comprise any system that can reliably send the message from the controller to multiple nodes 204₁₋204ₙ, and that a node 204 can use to send a message to the controller 202. For example, multicast may be used to send a message from the controller to multiple nodes. Where multicast is not available, or when the target is a single node, unicast may be used. An alternative transport layer would be to use the standard HTTP protocol to contain the message, and use unicast.

In one implementation, communication between the controller 202 and node 204 uses a Multiple Device Management (MDM) protocol to send scripts to the agent service 218, return results of running scripts, tell the agent service 218 to run binary executable code, perform other operations on the node 204 via the agent service 218, and send alert and event information from the agent service 218 to the controller 202. In this implementation, the MDM protocol operates on top of a transport layer protocol which provides reliably network communication between the controller and one or more agents, such as by using sender-side guaranteed multicast (SGM). Note that while the invention will be primarily described by logical communication via the messaging protocol and/or transport protocol, it is understood that an underlying physical network 216 (whether wired or wireless) connects the controller 202 and the nodes 204₁-204ₙ.

By way of example of one common type of operation, the administrator via the controller computer 202 may execute a set of commands (e.g., a script) on one or more selected nodes. This is generally accomplished by selection of the nodes, and sending messages to the selected nodes. In addition to scripts, the messaging protocol 314 is extensible to allow for alternative types of operations, such as the execution of pre-compiled programs, or certain other operations.

In accordance with other aspects of the present invention, the node 204 includes the agent service 218, comprising the agent program 312. In general, agent service 218 is responsible for performing actions at the request of the controller 202, and for sending alerts and events to the controller 202. To this end, the agent program 312 receives communications (messages) from the controller 202, determines how to perform a required action or actions specified in the message (if any), and as needed, passes the action along with any arguments (parameters) to an appropriate execution engine 320. By way of example, if the controller 202 sends the agent program 318 a script, the execution engine 320 would typically be a corresponding script interpreter. The agent program also allows for some other operations which are part of the protocol between the controller and the computers, such as execution of binary executable code on the node 204. Note that instead of sending the binary executable code, the controller 202 preferably sends a network address for that code for the node 204 to either run it from that location, or download and run it. A node operating system 220 is shown for completeness, as well as a controller operating system 222.

In addition to execution of scripts or programs, other operations such as reboot, shutdown or suspend (move to a low power state) may be requested of a controlled node. Because if such operations were performed immediately (such as via script), the node 204 could not provide a result to the controller. Instead, such operations are performed by a special function-handling component 322 that first communicates a result to the controller 202, essentially stating that the command message has been received and understood. After sending the result, the node takes the appropriate action to satisfy the request.

To summarize, the MDM protocol enables the controller 202 to request that one or more nodes execute a particular operation, such as running a script on the agent, using a standard scripting host, or running binary code on the agent. The protocol does not have an understanding of the operations being performed, thereby keeping the protocol simple, and avoiding special case operations. However some operations have implications on the operation of the protocol itself, and are thus expressed in the protocol. Such special operations may include rebooting, suspending or shutting down the node computer. Also, the MDM protocol allows for management information to be exchanged, such as when a controller first communicates with a node so as to control it.

The MDM protocol is also used to send the results of running a script or binary, or special operation, back to the controller 202. Node alerts and events may be sent via the MDM protocol, as well as heartbeats, to periodically inform the controller that the node is properly operating. The interval information is configurable, and the controller 202 can send the interval information to the nodes via the MDM protocol.

Upon receiving the result of an operation, the controller 202 maintains a record of the operation. To this end, as the results come in from the nodes 204₁-204ₙ, the results are extracted from the returned messages, and stored into the database 302. This provides an ongoing and complete record of each operation, for each node. The administrator or a process (such as a script) can interrogate this information on the controller 202 to determine the success of the operation on each node, and if necessary investigate or resolve failures. The message format also provides a way for the controller to maintain information about the state of each node, comprising the status of any alerts on the nodes.

As can be appreciated, the various agent service operations, including the running of scripts and performing of other actions, gives an administrator significant flexibility to perform arbitrary operations on the servers in a data center. For example, with many typical management operations, ready-built and tested scripts can be provided with the controller or node computer, which may be a preconfigured server. Such scripts give the data center administrator the ability to manage the servers in the data center for common operations, and may be provided with the controller 202, ready to use. Additional scripts may come with particular appliance servers or the like, (including new types of appliances, such as cache appliances). In such a case, the administrator need only load the scripts onto the controller 202, and configure the controller program 306 to know about these new scripts. Further, the node computers may be shipped with relevant scripts thereon, e.g., based on their function, and then automatically provide those scripts to the controller 202. For special situations, custom scripts can be written, tested and then added to the controller 202 by configuring the controller to know about the new script.

As described above, each node computer includes the agent service 218. As with any given controller, agent installation may come with the node, e.g., the computer ships as an appliance, whereby no installation is required. Alternatively, the agent service may comprise separate software that needs to be installed, such as via a supplied installation script that performs installation on each computer to be managed.

To simplify the burden of running a data center, when a computer containing the agent service 218 is booted, the agent service 318 may automatically broadcast its existence on the network via a discovery component 330, such as via an auto-discovery protocol such as that provided by Universal Plug-n-Play (uPnP, a standard for auto-discovering computing devices on a network). On nodes having multiple network interface cards (NICs), the NICs used to broadcast can be restricted, e.g., if more than one NIC is used, only the first one which contains a responsive controller will be used for future operations, until the next reboot.

The controller 202 notices the broadcast via a discovery listening process 332, and if this computer does not already exist in the controller's representation of computers of which it knows, the broadcasting computer is added, and the controller will refer to this computer as a node. To this end, when the controller 202 notices an auto-discovery broadcast, the controller determines whether it already knows about this node. If so, the node has been previously booted within the data center, and is either in the list of uncontrolled or controlled nodes. If it is a controlled node, the controller 202 reestablishes control of the node. In either case, it marks the node record to show that the node is booted on the network. If the node is not known by the controller, the controller 202 will respond and add the information about the node to its internal database 302. The information obtained by the controller 202 will comprise the unique identifier of the node (such as a globally unique hardware identifier such as the BIOS GUID or MAC address of the network interface cards). When a node is newly discovered, it is first considered an uncontrolled node, and the administrator can make the determination whether to make this node be one that is controlled by the controller 202.

In addition to simplifying control, auto-discovery further provides for the use of automatic configuration of new machines. For example, an administrator may specify that a given set of commands is to be performed against all new machines, e.g., to inventory the new system, or apply currently required hotfixes, or to configure it for a given customer). The administrator may then write a script to consume an event raised when the new computer is added on the controller, and take appropriate action. Once discovered, the administrator can list all the new nodes in the data center, and either add them to sets as required, or perform operations against them. As can be readily appreciated, using an auto-discovery mechanism for finding new computers in the data center saves the administration from having to manually enter information (e.g., name, serial and IP information) for every new computer, and thus avoids potential data entry errors. In this manner, the administrator has an online reference list of available computer nodes, which aids in keeping inventory information about the data center contents.

To provide security, the present invention guards against controller software and agent software not authorized by the data center administrators, (respectively a "rogue controller" and "rogue agent"). Controllers and agents under control of the data center administrators are called "trusted controllers" and "trusted agents" respectively. To this end, the nodes which broadcast auto-discovery information onto the network, where several controllers may exist, are configured to only accept a response from the first controller to respond. Once the node receives a response, using public key, private key technology, the node thereafter will only accept control information from that controller and other trusted controllers. Normally this would be only the controller that first controlled the node, however it is anticipated that controllers will fail and need to be replaced, however such replacement controllers will be trusted via the private key. Note that the first controller to respond may be a rogue controller, in which case the node would be lost from control of the data center, however this may be avoided by deploying appropriate certificate data onto the agent before it is booted for the first time. If a new node is lost to a rogue controller, it can cause loss of resources for the data center administrator, however the rogue controller does not have access to any customer information on the node.

Once trust is established between the controller and the node, that node becomes controlled and a rogue controller cannot take over control of the node, although trusted controllers may take over control of the node (for example, to replace the original controller). Since rogue computers can also sniff the network, sensitive information is not passed over the network unencrypted, and the encryption is such that only the target nodes of a secured message can decrypt it. When an operation is invoked, it may specify whether the communication needs to be encrypted. This might be at the request of the initiating process, or because the script is marked as requiring encryption in the script database.

The data store 302 maintained by the controller 202 is arranged as a defined schema. In general, the controller maintains details of the nodes in the data center, set information, available operations, operations currently in progress and results of completed operations. Although not necessary, for convenience this database schema is arranged similar to the object model schema through which the administration program 304 interfaces (via schema interface 310) with the controller program 306 and the data store 302. Note that in one implementation, the object model schema represents the information in the form of defined objects, while in general, the database schema maintains records or the like that are used to construct the objects when queried. The schema is generally represented in FIGS. 4A-4I, and further described in APPENDIX A. However, the described schema is only one example, and the present invention is not directed to any particular way in which the data is maintained or presented.

The controller 202 thus maintains a certain amount of information about each node in the database. For example, each node is represented by a device data structure, comprising communication-related data (e.g., TCP-IP hostname), a unique identifier, and other miscellaneous data. Most of this information is a cached representation of the state of the node, such as the node's name. The cached information may include the items set forth in the following table, which also includes details about how that information is updated on the controller if it changes on the node:

| **Information** | **Master location** | **How the controller is notified of the change** |
|---|---|---|
| Machine name (TCP/IP hostname, excluding domain) | Node's operating system | Machine name change only becomes effective on reboot. Since reboot reinitiates discovery process, the new name is send to the controller. |
| Domain | Node's operating system | Domain change only becomes effective on reboot. Since reboot reinitiates discovery process, the new name is send to the controller. |
| GUID | Node's hardware (BIOS) | Never changes |
| Serial number | Node's firmware (BIOS) | Should never change |

Other items of information about a node that are maintained on the controller include:

| **Information** | **Description** |
|---|---|
| Controlled? | Flag to say whether this node is controlled by this controller |
| Heartbeat timestamp | Date and time of last successful heartbeat with the node |

Nodes are identified on the controller by various information, such as the node name, (a short-form of the node's name, e.g., "server07"), and the MAC addresses of the NIC cards on the node. The node name may be used as the unique identifier for the node record on the controller. Both of these pieces of information are sent from the node to the controller using auto-discovery each time the node boots. If auto-discovery is not available on the network, then the administrator needs to manually add the node record containing at least the node name.

The node name may also be used by the controller 202 for communicating with the node. In one implementation, the controller resolves the name to an IP address using DNS, which means that the administrator needs to ensure that the controller has access to a DNS server that maps the node name to the (or an) IP address on the administrative NIC. The DNS server may be based on static data or use dynamic DNS to keep current with server names and IP addresses. Note that if the administrative network does not currently have a DNS server, then the controller itself may be used as a DNS server. Similar processes to dynamic DNS, such as one that watches for IP changes on the node and sends the updates to the controller may be used. Once a node becomes controlled, the controller establishes a permanent connection to the node.

Auto-discovery is based on the network between the node and the controller supporting the forwarding of multicast discovery packets, e.g., the packets are sent by the node to a pre-defined (fixed) multicast IP address and port. Since not every data center environment supports multicast forwarding, (e.g., either because of router limitations, or policy), the data center can operate in other modes, such as to use a controller per multicast domain (typically, one controller per subnet), or operate without auto-discovery. In this case, some operations that would otherwise be automatic are performed manually.

When a managed node reboots, the controller looses any permanent connection to the node. In one current implementation, the controller 202 does not attempt to automatically reestablish communication, but rather waits for an auto-discovery packet from the node. When the controller 202 receives this packet, it knows the node is available and re-establishes connection with the node. In the event auto-discovery is not available on the work, the administrator manually re-establishes communication between the controller and the rebooted node, such as via an appropriate method, e.g., a Controller.RecoverManagedNode method. Note that in general, methods do not return a value, so if desired, a caller needs to use a language-specific method to determine whether a method (or other operation) failed, as described in APPENDIX A.

The object model, which implements the schema, comprises three main features, namely sets, devices and jobs. Sets represent groups of devices. Each set has a unique name, and may contain none, one or more devices. A given device may be in multiple sets. Sets are represented on the controller only; in one present implementation, the devices have no knowledge of what sets they are in, and are not informed when they are added or removed from sets. Sets are implemented in the object "Sets". Note that in one present implementation, only devices can be members of a set, however in other implementations, sets can be members of other sets.

Devices are the individual servers in the data center that may be managed by the controller. In one present implementation, the only devices that can be managed are computers that have the agent software installed on them. Devices are identified by their name, and the controller resolves this name to an IP address using the DNS in order to communicate with the device.

Device information is stored in several objects. A Devices object stores the basic information, including the name, while the MAC addresses are stored in DeviceHWAddrs objects, which are linked to the Devices object. Other hardware information (such as SMBIOS GUID and disk drive signatures) may be stored in instances of this object. To distinguish among the different types of information, the DeviceTypes object holds definitions of the different types of hardware addresses. Each instance of DeviceHWAddrs is linked to the corresponding instance of DeviceTypes. The IP address associated with a particular MAC addresses may also be stored, in instances of DeviceHWIPAddrs which are associated with the DeviceHWAddrs instance representing the particular MAC address. At present, IP address information is not stored for MAC addresses.

Jobs generally refer to two types of jobs information, namely job templates, which are jobs ready to be run, and job histories, which are previously run jobs. Job templates are stored in the JobInstances object. Instances of this JobInstances object are identified by a combination of two properties, a job name and a job identifier. Job templates are stored with a job identifier of zero and a name that is unique among the JobInvocations with a job identifier of zero. The properties of a job template (apart from the job identifier) may be edited by the user. In a present implementation, no other objects are used to store job templates.

Job histories are stored in several objects. A JobInvocations object stores the basic information, including the name, job identifier and time that the job was run. The job identifier is a value other than zero. The name may be blank, and may be the same as other JobInvocation instances (since the job identifier uniquely identifies a job history). Each JobInvocation that represents a job history is linked to an instance of the Jobs object. This represents the status of the job, irrespective of the number of devices it was run on. It can be regarded as the "parent" for the status of the jobs on each of the individual devices. The actual status for the job on each device is stored in additional instances of the Jobs class, one per device. Each of these instances is linked to the parent Jobs instance, and can be regarded as the "children" of the parent instance. This forms a two-level parent-child relationship, which may be extended to additional levels. Note that if the job is not run on any devices (because the set it is being run on is empty), then the parent Jobs instance will not be linked at any children Jobs instances).

The Jobs instances that correspond to the status of a job on an individual device do not store the actual output of the job. Instead, the output is stored in one or more instances of the JobLogs object. Each instance of JobLogs stores part of the output of the job. The full output can be reconstructed by using the sequence property of this object to put the partial outputs into order. JobLogs store three types of output, including the standard error output, the standard output, and the exit status when the job actually exits. The JobLogs instances are created as the output from the job comes into the controller. Note that it is possible for there to be no JobLogs associated with a given (child) Jobs record because either the job did not start on the device (in which case the Jobs record contains an error indication), or no output or exit status has yet been received from the device.

As can be understood from FIGS. 4A-4I, APPENDIX A and the above description, the architecture, structures and protocols of the present invention enable considerable flexibility and efficiency in managing a data center. A first example can be seen when installing an upgrade or patch on a number of computers. Instead of having an administrator go to each computer (possibly remotely) and run the upgrade package, with the architecture and structures of the present invention, the administrator may go to the controller (possibly remotely), select the target nodes from the sets and node lists maintained on the controller, and initiate the upgrade, possibly at a time in the future. After the upgrade has been initiated, the administrator can check the results on the controller and see which (if any) nodes failed to complete the update. This significantly reduces the effort required to perform the upgrades, and automatically maintains an auditable log of the results of performing the upgrades, and also reduces the potential of errors if (for instance) the upgrade requires specific processing on each computer which would previously have to be manually entered onto each computer. Further, using aspects of the present invention, the operation can be stored in the controller and tested on a test system before the identical operation is performed on the production systems.

A second example of this flexibility and efficiency can be seen when adding a new server for a new hosting customer. Instead of installing the operating system manually, then configuring the computer for the customer, with the various aspects of the present invention, the administrator can maintain a number of available 'spare' computers, which are powered on, but not in live use. When a new customer signs up, a set of operations can be initiated (either automatically or manually) to select one of the spare computers, then configure it for the particular customer. This configuration may also include configuring any additional devices (such as switches or load-balancers) required to service this customer. Because the configuration steps are performed by scripts, rather than manually, the risks of errors are significantly reduced. Additionally, it can be performed automatically, enabling the data center administrator to configure the system to (for example), automatically configure the system for the customer after the customer completes a purchase request on the data center's Web site.

A third example can be seen in monitoring and collecting data about the status of a group of computers. Instead of having to collect data from a number of computers by manually setting up a collection system, an operation can be run on each of a number of computers. The operation can regularly report usage information back to the controller, which then stores that information into storage such as the data store or other suitable memory. The information can at a later point be analyzed by the administrator, to understand how the computers are operating, to investigate the reasons for failures in service, or for another suitable purpose.

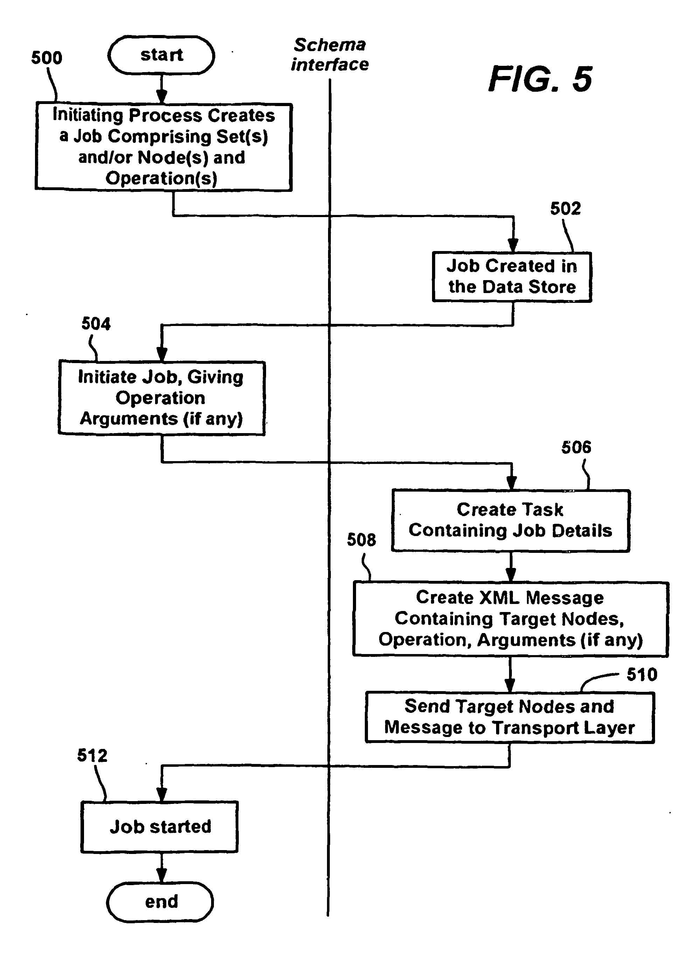

Turning to an explanation of the operation of the present invention with particular reference to FIGS. 5-7, to perform an operation on a number of nodes, the target nodes are first selected and a job comprising the operations to perform created therefor, as represented by step 500. Selection may comprise selecting an individual node, multiple individual nodes, a set, multiple sets, or any combination. The operation to be performed may be a script, binary program, or other type of task. Note that the initiator process 304, (which may be a user through an application, Web UI or command line, or an automated policy in script or rule) makes the selection and selects the operation. A job 404 is created in the data store for this operation on the selection.

At the time the job is to be run, it is initiated, with any arguments provided, as represented by step 504. When initiated, at step 506 the controller 202 creates a message comprising information about the task (e.g., in the case of a script, the script itself and any parameters). This message is then associated on the controller 202 with the target nodes.

The message and the representation of the target nodes is used by the controller to initiate the operation, which is accomplished, in one implementation, by creating an appropriate XML message at step 508 and sending the message to the target nodes using a transport layer at step 510. At this point, the transport layer 212 on the controller 202 has been given the information about the target nodes, and the message to send to those nodes. Note that control has been returned to the initiating process 304 (user interface, script or process that initiated the operation on the controller 202), which does not have to wait for the operation to complete on all nodes. This allows the initiating process 304 to initiate multiple operations as desired and later collect the results of those operations.

The message is passed to the transport layer, which is responsible for ensuring that the message gets to the correct nodes, e.g., across a TCP/IP network. When received at the target nodes, the job is started, as represented by step 512.

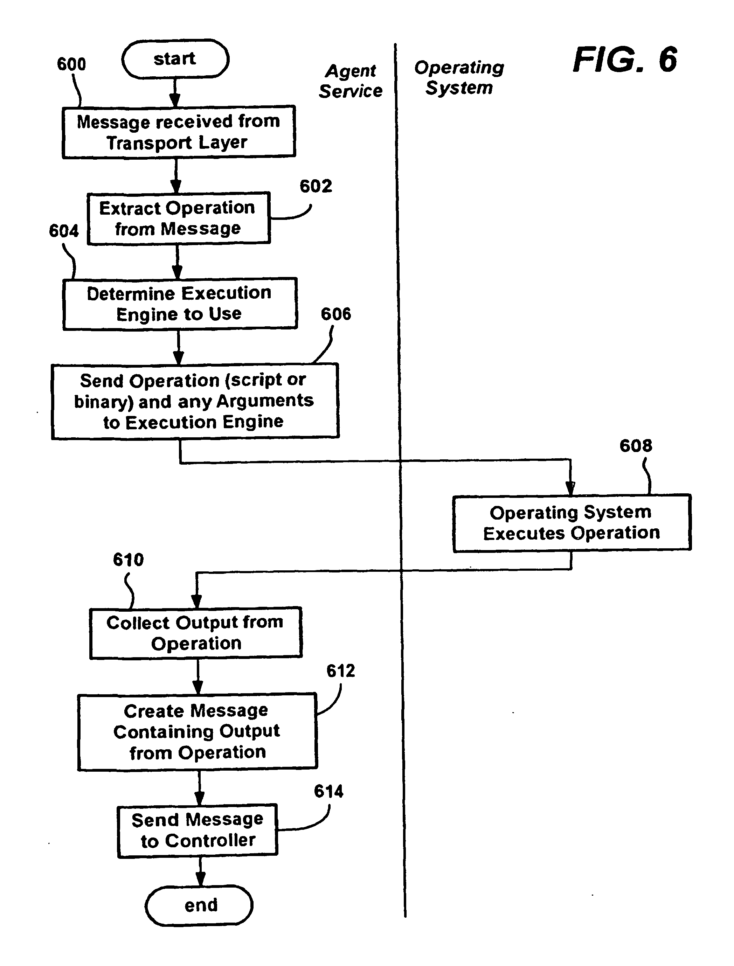

FIG. 6 generally represents the job being run on a node, such as the node 204, beginning at step 600 wherein the message is received. In FIG. 6, the left side of the vertical bar shows the actions performed by the agent program or service on the node, while the right side shows the action performed by the node's operating system. On the node, the agent's transport layer receives the message, and passes the message up to the agent service 218 for interpretation. In general, the agent service 218 determines how to perform the action, executes it, and results are returned back to the controller via the transport layer.

More particularly, step 602 represents extracting the operation from the message, and step 604 represents determining the execution engine to use. For example, different types of script require different execution engines, and binary code may need to be downloaded before execution. In any event, step 606 represents sending the operation and any arguments passed in the message to the execution engine that was determined, while step 608 represents the operating system executing the operation.

Step 610 represents the output of the operation being collected and/or otherwise stored, which may be anything from a simple success or failure to a collection of operation-requested data. Step 612 creates a message (e.g., in the MDM protocol in the XML format), and step 614 returns the message to the controller 202 via the transport layer. In this manner any results of the operation (such as the output from a script or program) are formatted into a message and returned to the controller using the transport layer.

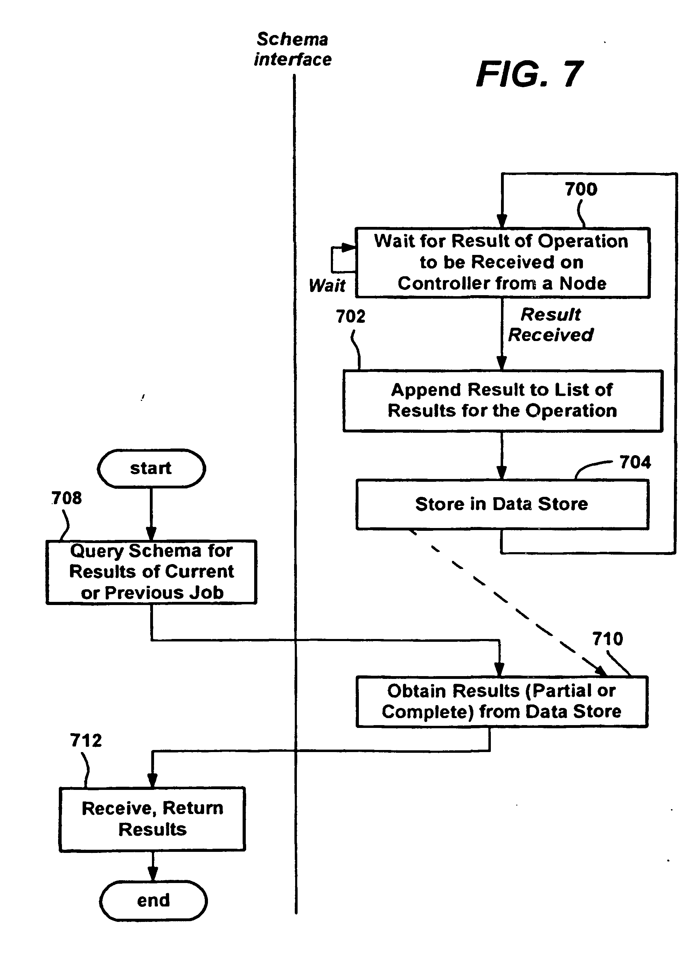

FIG. 7 represents a way in which the initiating process 304 that initiated the operation on the controller 202 can determine the results of the operation on each node. In general, via step 700-704, the controller maintains a record of the operation, e.g., as the results come in from the nodes at step 700, the results are extracted from the returned messages on a per operation basis at step 702, and stored into the data store 302 (or other suitable storage) on the controller 202 at step 704. This activity provides an ongoing and complete record of the operation, for each node.

As represented via steps 708-712, the administrator or a process (such as a script), which is not necessarily the initiating process 304, can interrogate this information from the controller 202 to determine the success of the operation on each node, query for other data, and if necessary investigate or resolve failures.

As can be seen from the foregoing detailed description, there is provided a multiple device management method and system that facilitates management of computing devices, such as in a datacenter. The method and system are highly flexible and efficient, and significantly reduce the costs associated with managing multiple computing devices.

### APPENDIX A

In one typical MDM (Multiple Device Management) implementation, the schema interface may be derived from the Common Information Model (CIM) standard for representing computing process and devices. Such an implementation on a Microsoft® Windows® operating system, for example, would be referred to as a WMI schema. The various information herein describes such a suitable schema and other related data, but should be considered as only an example.

### Identifier Definitions

### SET NAME

The set name uniquely identifies a set. It is stored in Sets.Name property and can be up to 256 Unicode characters. Any character is valid, but non-printable characters are not recommended. Names are case-insensitive, but case is preserved. The set name needs to be unique across all set names.

### DEVICE NAME

The device name uniquely identifies a device, and is used to find the IP address of the device in order to communicate with it. It is stored in Devices.Name property. It can be up to 256 Unicode characters. Any character is valid, but non-printable characters are not recommended. Names are case-insensitive, but case is preserved. The set name needs to be unique across all device names. Note that device name and set name have the same number of characters because they are stored in a single field in the JobInvocations object.

### JOB NAME

The job name is used to uniquely identify job templates, and as a piece of identification information for job history records. It is stored in the JobInvocations.Name and Jobs.Name properties. The job name can be up to 50 Unicode characters. With any character being valid, but non-printable characters not recommended. Names are case-insensitive, but case is preserved. For job templates (jobs where the job identifier is zero), it needs to be unique. However the same name may also be used, possibly multiple times, in job history records.

### DEVICE TYPE NAME

The device type name is used to identify the type of a device. It is stored in the Devices.Type property, and defined in the values of DeviceTypes.Name properties. It can be up to 50 Unicode characters. All characters are valid, but non-printable characters are not recommended. Names are case-insensitive, but case is preserved. It needs to be unique across all instances of DeviceTypes.

### DESCRIPTIONS

Descriptions are typically 256 Unicode characters (but see individual object definitions for specific values). Any Unicode characters are valid, including carriage returns and newlines.

### Objects

Each object may contain properties and methods, and have associations with other objects. In one implementation, the objects, properties, methods and associations are exposed through WMI. Additional association classes are used to implement associations, as described below.

Each object definition starts with a summary, then a definition in the following format:

| | |
|---|---|
| Class name | Object name: this is the class name in WMI class name. |
| Derived from | WMI class name that this class is derived from |
| Description | Description text of this class, as stored in WMI |

The conditions under which the class can be created and deleted are described below, along with information about the other classes to which this class is associated. Each property of the class is also listed, in this format:

| | |
|---|---|
| Property name | Name of the property in WMI |
| Description | Description text of the property, as stored in WMI |
| Type | CIM type of the property |
| Access | Whether the property can be read, written to or both |
| Key | Whether this property is a key value. Multiple properties can be a key. |
| Values | Description of value of the property, such as maximum length of a string property or meaning of the numbers of an integer property. |

Each method is described as set forth below:

| Description | Description of the method, as stored in WMI | |
|---|---|---|
| Arguments: | | |
| Argument name | Direction of the argument (in or out), and CIM type | Description text of the argument, as stored in WMI |
| Return value | CIM type | Meaning of the return value |

### Sets

In essence, sets are the building blocks of multiple device management, and comprise objects that group devices according to some logical or physical grouping. There is a one-to-many relation between a Sets object and Devices objects. Commands can be executed on each member of a Sets object by means of the Execute method.

| Class name | Sets |
|---|---|
| Derived from | CIM LogicalElement |
| Description | "The Sets class represents a collection of devices. Sets group devices for administrative purposes, and run jobs on multiple devices simultaneously. Each set must have a unique name. Sets can contain devices but not (at least presently) other sets." |

Instances of the Sets class are created by the user (or other process). In one implementation, instances are never created automatically by the object model. The only property required for new instances of the Sets class is Name. The value of Name needs to be unique among the instances of Sets on the controller. Instances of the Sets class can be deleted by the user (or other process). Instances are never deleted automatically by the object model in a described implementation. When an instance is deleted, no changes are made to other instances (including those instances which refer to the class being deleted).

Instances of Sets can have associations to instances of Devices; an instance of Sets has an association to each instance of Devices which is a member of the set. Each instance of Sets many be associated with zero, one or more instances of Devices. Instances of Sets can also have associations to instances of JobInvocations. If the JobInvocations instance is a template (the RootJobID property of JobInvocations is zero), then the associate represents that the job template represented by the JobInvocations instance is to be run on the associated set. If the JobInvocations instance is a history record (RootJobID is not zero), then the associate represents the fact that the job in JobInvocations was run on the associated set.

### Set Properties

### Name

| Property name | Name |
|---|---|
| Description | "Name of the set" |
| Type | String |
| Access | Read |
| Key | Yes |
| Values | 256 Unicode characters, excluding the newline or carriage return characters |

The value of this property can be changed using the Rename method. The value must be unique among the Sets instances on the system.

### Description

| Property name | Description |
|---|---|
| Description | "Description of the set" |
| Type | String or NULL |
| Access | Read, Write |
| Key | No |
| Values | 256 Unicode characters |

This is a free-text description of the set. It may be NULL or empty, and can be updated.

### Unused Properties

The Caption, InstallDate and Status properties are inherited from the parent classes but are currently unused in a current implementation.

### Methods

### AddDevice

AddDevice is used to add controlled or uncontrolled device to a set.

| Description | "The AddDevice method adds a device as a member of the set." | |
|---|---|---|
| Arguments: | | |
| Device | [in] Devices | "The Device input parameter is the reference to device. It represents the path of the devices which is to be associated with a set." |
| Return value | Void | |

### RemoveDevice

| Description | | "The RemoveDevice method removes a device from the set." |
|---|---|---|
| Arguments: | | |
| Device | [in] Devices | "The Device input parameter is the reference to devices. It is the path of the device which is to be disassociated from the set." |
| Return value: | Void | |

### Rename

| Description: | "The Rename method renames the set name to the name specified." | |
|---|---|---|
| Arguments: | | |
| SetName | [in] string | "The SetName input parameter provides the name for the set.". |
| Return value: Return value: | Void Void | |

### Execute

| Description: | "The Execute method runs a job on the devices in a set. If the job started successfully, the method returns the job identifier of the parent job. | |
|---|---|---|
| Arguments: | | |
| JobInvocationName | [in] string | "JobInvocationName input parameter is the name that will be assigned to the Name property of the JobInvocations instance that will be created." |
| CommandType | [in] 32 bit integer | "CommandType determines how the command parameter is interpreted" [DCR 4880 added this argument] |
| Command | [in] string | "The Command input parameter is the path of the command to be run. The values that may be given depend on the value of the CommandType parameter." |
| Parameters | [in] string | "The Parameters input parameter specifies the arguments given when the job is started. This parameter is used depending on the value of the CommandType parameter." |
| Description | [in] string | "Description input parameter is the description for the executing command which is to be logged in the JobInvocations object." |
| JobID | [out] 64 bit integer | If no error occurs (the return value is 0), this contains the RootJobID of the newly created JobInvocation instance. If an error occurs (the return value is not zero), this contains 0. [DCR 4891 added this argument] |
| Return value: | 32 bit integer | The RootJobID of the newly created JobInvocation instance, or 0 if the job was not started. |

This method causes a job to be run against the members of the set on which it is run. If the job is successfully created, it causes a JobInvocations instances to be created for the job. The value of the RootJobID property of the new JobInvocations instance is returned as the return value of this method. Note that job execution is asynchronous, so success of this method does not mean that the job itself will be successful on the agents.

The CommandType argument specifies how the Command and Parameters fields are to be interpreted:

| **CommandType value** | **Meaning of Command argument** | **Meaning of Parameters argument** |
|---|---|---|
| 1 | Specifies a script to be downloaded from the controller to the devices. Must contain a file that is accessible from the controller (either a local path on the controller or a UNC path). | Command line parameters for the job |
| 2 | Specifies a script or binary accessible from both the controller and the agents. Agent accesses the file using the path given (either local path on the agent or a UNC path) | Command line parameters for the job |
| 3 | Special command. See available commands, listed below | Ignored |

This is written to the Command property of the new JobInvocations instances. The value of the Parameters argument field is silently ignored if CommandType is 3. The maximum length of the Description argument is 256 Unicode characters. This is stored in the Description property of the new JobInvocations instance. It is not an error for the set to be empty. In this case, a JobInvocations instance is created as normal, along with the parent Jobs instance. However there are no child Jobs instances. Users of the object model must be prepared for this situation.

### Special Commands

If CommandType is 3, then the Command argument contains one of the following values:

| **Contents of the Command argument** | **Meaning** |
|---|---|
| "Shut down" | Shutdown the server |
| "Reboot" | Reboot the server |

The text is case-insenstive (that is, for example, "Reboot", "REBOOT" and "reboot" all cause the server to reboot). If the value of the Command argument is not one of these, the method returns an error.

### DEVICES

Devices are members of sets; sets are groups of devices. Devices represent physical computer systems which for example are typically server appliances. With multiple device management, one goal is to perform management on many machines simultaneously. Nevertheless, with the device object commands can also be executed.

| Class name | Devices |
|---|---|
| Derived from | CIM UnitaryComputerSystem |
| Description | "The Devices class represents the devices that are either automatically discovered or manually added." |

### Creation

Instances of Devices can be created at a request of the user or other process, or automatically by the controller based on the reception of an auto-discovery packet from an agent. An instance of the Devices class may be created manually by the user or other process. The new instance needs at least a value for the Name property, and this value cannot already exist as the Name of another instance of the Devices class on the system. The value of the Name property needs to be a name that can be resolved on the controller to the IP address of the administrative interface on the device itself. Typically this resolution will occur using a DNS server.

The new instances can be associated with one or more MAC addresses, and each MAC address with one or more IP addresses. This is indicated by associating the new instance of the Devices class with instances of DeviceHWAddrs, and associations of DeviceHWAddrs with DeviceHWIPAddrs. However, only the name is needed to communicate with machine. The controller uses DNS to resolve the name to an IP address. MAC and IP are not used for communication and are essentially for information only on the controller. When the instance is created, controller sends request to agent to get node information, including the IP and MAC addresses. For all manually created Devices instances, the LastDiscoveryTime will be NULL. If at some later point an auto-discovery packet is received that matches this Devices instance, this field will be updated with the time that the packet was received.

The SMBIOS GUID alternatively may be stored in the controller and used to uniquely identify the device. This can be done with no modifications to the object model, since it can be stored as a new device type (in DeviceHWAddrs, linked to a DeviceTypes representing the SMBIOS GUID.

### Deleting

Instances of the Devices class may be deleted by the user or other process. Instances may be deleted by the system if the Controller.RefreshDeviceList() method is called. When an instance of Devices is deleted, any instances of DeviceHWAddrs that refer to the same device as also deleted (which might also cause deletion of linked DeviceHWIPAddrs

### Associations

Instances of Devices can have associations to the following classes:
■ To instances of Sets
   An instance of Devices has an association to each instance of Sets of which it is a member. Each instance of Devices many be associated with zero, one or more instances of Sets.
■ To instances of JobInvocations
   An instance of Devices has an association to JobInvocations. If the JobInvocations instance is a template (the RootJobID property of JobInvocations is zero), then the associate represents that the job template represented by the JobInvocations instance is to be run on the associated device. If the JobInvocations instance is a history record (RootJobID is not zero), then the associate represents the fact that the job in JobInvocations was run on the associated device.
■ To instances of Jobs
   An instance of Device has an association to instances of Jobs that represents the parent job of each job run on this device.
■ To instances of DeviceHWAddrs
   An instance of Device has an association to an instance of DeviceHWAddrs for each hardware address on the device that the controller knows about. In a current version, the only hardware addresses stored on the controller are MAC addresses of NIC cards.
■ To a single instance of DeviceTypes
   An instance of Devices has an association to an instance of DeviceTypes giving the device type. In a current version, only a single device type is supported, so all Devices instances associate with a single instance of DeviceTypes.

### Properties

### Name

This is inherited from the parent class.

| Property name | Name |
|---|---|
| Description | <inherited> |
| Type | String |
| Access | Read |
| Key | Yes |
| Values | 256 Unicode characters |

The value of this property can be changed using the Rename method.

### Alive

| Property name | Alive |
|---|---|
| Description | "Status flag to indicate whether the controlled device is alive." |
| Type | Boolean |
| Access | Read |
| Key | No |
| Values | True if device is alive; false if device is not alive |

If the device is uncontrolled, this property is always false. Otherwise, this property is set to true when a device becomes controlled, and set to true (if currently set to false) every time a heartbeat is received from the device. The heartbeat time period is a global setting for the controller. The agent should send a heartbeat packet every heartbeat time period. The controller will set this property to false if it does not receive a heartbeat from the device within a period of one-and-a-half times the heartbeat time period. The heartbeat time period used is the one currently set on the controller. This may be different to the device's heartbeat time period.

### Controlled

| Property name | Controller |
|---|---|
| Description | "Status flag to indicate whether the device is being controlled." |
| Type | Boolean |
| Access | Read |
| Key | No |
| Values | True if device is controlled from this controller; false if not |

The value of this property is set by starting or ending control of the device, using the Manage method.

### HeartBeatTime

| Property name | Heartbeat |
|---|---|
| Description | "Time at which heartbeat from the controlled device is updated. This property is periodically updated by the heartbeat communication between the controller device and controlled device." |
| Type | Datetime or NULL |
| Access | Read |
| Key | No |
| Values | |

If the device is uncontrolled or becomes not controlled, this is NULL. Otherwise, when a device becomes controlled this is set to the time that it becomes controlled. While a device is controlled, this is set to the time that the most recent heartbeat was received from the device.

### AlertStatus

| Property name | AlertStatus |
|---|---|
| Description | "Indicates whether alert- triggering mechanism is enabled, disabled, unavailable., status not known" |
| Type | 32 bit integer |
| Access | Read |
| Key | No |
| Values | 0=Disabled, 1=Enabled, 2=Unavailable, 3=Status Not Known |

If the device is not controlled or becomes not controlled, this is always set to Unavailable. Otherwise, when a device becomes controlled this is initially set to Status not Known. After a call to EnableAlerts() this gets set to the value returned from the agent, which may be Unavailable, Enabled or Disabled.

### Type

| Property name | Type |
|---|---|
| Description | "The Type property is the type of device" |
| Type | String |
| Access | Read, Write |
| Key | No |
| Values | "Microsoft Server Appliance" |

### Description

| Property name | Description |
|---|---|
| Description | "Description of device" |
| Type | String or NULL |
| Access | Read, Write |
| Key | No |
| Values | 256 Unicode characters |

### LastDiscoveryTime

| Property name | LastDiscoveryTime |
|---|---|
| Description | "Time when this controller device last received auto-discovery information from the controlled device. The value is NULL if the controlled device has never been auto-discovered." |
| Type | Datetime or NULL |
| Access | Read |
| Key | No |
| Values | |

Every time that an auto-discovery packet is received that matches this Devices instance, that date is updated to the current date. This can be used to identify manually entered records that have never been seen on the network.

The following properties are inherited from the parent classes but are presently unused: Caption, CreationClassName, InitialLoadInfo, InstallDate, LastLoadInfo, NameFormat PowerManagementSupported, PowerManagementCapabilities, PowerState, PrimaryOwnerContact, PrimaryOwnerName, ResetCapability, Roles, Status and Time.

### Methods

### EnableAlerts

| Description | "The EnableAlerts method determines whether a device sends Server Appliance Kit alerts to the controller device.. | |
|---|---|---|
| Arguments: | | |
| EnableFlag | [in] Boolean | "The EnableFlag input parameter is a Boolean value that enables or disables the alerts for True or False flag values correspondingly." |
| Return value: Return value: | Void Void | |

This call is synchronous. If alerts are enabled on a device, the device will return the current alerts. If alerts are disabled, the controller will delete the details of alerts for this device.

### RecoverManagedDevice

| Description | "The RecoverManagedDevice method returns devices to normal state. This method can be invoked to bring back to the normal operating state if the controlled device does not respond to requests from the controller device.." | |
|---|---|---|
| Arguments: | | |
| Return Value: | Void | |

This method can be called if the user believes that the configuration on a device is corrupted. The controller sends out the following information to the device:
■ A request for the device information.
■ A control request to manage this device
■ The current heartbeat configuration information (the heartbeat interval)
■ The current alert status for this device (enabled or not enabled)
This call returns after all of these have been processed, and thus could take some time.

### Manage

| Description | "The Manage method places devices into either a controlled or an uncontrolled state." | |
|---|---|---|
| Arguments: | | |
| ControlFlag | [in] 32 bit integer | The ControlFlag input parameter is the value that specifies how to manage the device." |
| Return value: Return value: | Void | |

This changes the state of control for a device, and returns when that is complete. The value of ControlFlag specifies the operation to perform against the device:

| Value of ControlFlag | Meaning | Description |
|---|---|---|
| 0 | "Release control" | The device becomes uncontrolled. The controller's root certificate is left on the device, so the device can only be controlled by another controller with the same root certificate. |
| 1 | "Take control" | The device becomes controlled from this controller. |
| 2 | "Release control and remove certificate" | The device becomes uncontrolled. The controller's root certificate is deleted from the device, so the device can be controlled by any controller. |

An Error is returned if an attempt to control a device fails because of a protocol version error.

### Execute

| Description: | "The Execute method executes a command on devices, and then returns the job identifier relating to the parent job." | |
|---|---|---|
| Arguments: | | |
| JobInvocationName | [in] String | "JobInvocationName input parameter is the name of the JobInvocation instance that will be created." |
| CommandType | [in] 32 bit integer | See Sets. Execute |
| Command | [in] String | "Command input parameter is the path of the command to be executed." |
| Parameters | [in] String | "Parameters input parameter is the parameters to be passed to the executing command." |
| Description | [in] String | "Description input parameter is the description for the executing command which is to be logged in the JobInvocation object" |
| JobID | 64 bit integer | JobID of the new job, or 0 if an error occurred |
| Return value: | Void | |

TheSetPowerState method is inherited from the parent classes but is currently unused in this implementaion.

### DeviceTypes

In one implementation, devices report the same device type, "Microsoft Server Appliance".

| Class name | DeviceTypes |
|---|---|
| Derived from | CIM LogicalElement |
| Description | "The DeviceTypes class represents the various possible device types on the network." |

Instances of DeviceTypes can be created manually or automatically. When created manually, the Name needs to be unique across existing DeviceTypes instances. Manual creation can be used on networks where auto-discovery does not work.

Instances of DeviceTypes may be created automatically based on incoming auto-discovery packets, or on creation of instances of Devices. Another way that instances of DevicesTypes are created is based on the creation of Devices instances. Each Devices instance includes a DeviceType string. If a DeviceTypes instance does not exist corresponding to this string, a new instance of DeviceTypes is created with this string as its Name, and a blank Description.

### Deletion

Instances of DeviceTypes can be deleted, but only if there are no instances of Devices with the same type string as the one being deleted. If deletion fails because of this, the WMI DeleteInstance method should return with error WBEM_E_FAILED.

### Associations

An instance of DeviceTypes is associated with each instance of Devices that is of the same type.

### Properties

### Name

| Property name | Name |
|---|---|
| Description | "The Name property is the unique identifier for the device that is available on the network." |
| Type | String |
| Access | Read |
| Key | Yes |
| Values | 50 Unicode characters |

The name of a device type cannot be changed.

### Description

| Property name | Description |
|---|---|
| Description | "Description of the devicetype." |
| Type | String |
| Access | Read, Write |
| Key | No |
| Values | 256 Unicode characters |

The Caption, InstallDate and Status properties are inherited from the parent classes but are currently unused in a current implementation. There are no methods for this object.

### HWADDRTYPES

Every device typically contains many individually identifiable hardware parts. Each hardware part can contain an address or unique identifier.

| Class name | HWAddrTypes |
|---|---|
| Derived from | CIM LogicalElement |
| Description | "The HWAddrTypes class represents the possible types of device parts on the network." |

In one version, the only address type used internally is "MAC". This is used to store the MAC addresses of devices. Instances of HWAddrTypes can be manually or automatically created. An instance will be automatically created if an instance of DeviceHWAddrs is created where the Type property value does not match the Name property of an existing HWAddrTypes instance. In this case, the new instance of HWAddrTypes will be created with a Name property having the same value as in the DeviceHWAddrs Type property, and the Description property will be blank.

### Deletion

Instances of HWAddrTypes can be deleted. The deletion will fail if any Devices instances contain the same Type property as the Name property on the instance being deleted.

### Associations

An instance of HWAddrTypes is associated with all instances of DeviceHWAddrs that contain hardware address information for this type of hardware.

### Properties

### Name

| Property name | Name |
|---|---|
| Description | "The Name property is the unique identifier for the device parts that is available on the network." |
| Type | String |
| Access | Read |
| Key | Yes |
| Values | 50 Unicode characters |

### Description

| Property name | Description |
|---|---|
| Description | "The Description property is the description of the device part." |
| Type | String |
| Access | Read, Write |
| Key | No |
| Values | 256 Unicode characters |

The Caption, InstallDate and Status properties are inherited from the parent classes but are currently unused in a current implementation. There are no methods for this object.

### DEVICEHWADDRS

The device hardware address uniquely identifies a piece of hardware such as a NIC.

| Class name | DeviceHWAddrs |
|---|---|
| Derived from | CIM LogicalElement |
| Description | "The DeviceHWAddrs class represents the device parts and their hardware addresses." |

In one current implementation, the only type of hardware address that is used internally is "MAC". This is used to store the MAC addresses of devices. Instances of DeviceHWAddrs can be created automatically or manually. Automatic creation occurs based on received auto-discovery packets. If the packet contains a hardware address (containing a type and address), then a new instance of DeviceHWAddrs is created for the hardware address (which may also involve creating an instance of HWAddrTypes

### Deletion

Instances of DeviceHWAddrs can be deleted. Instances are also deleted automatically when the corresponding Devices instance is deleted.

### Associations

■ To single instance of Devices
   An instance of DeviceHWAddrs is associated to the instance of Devices which contains has the hardware address.
■ To single instance of HWAddrTypes
   An instance of DeviceHWAddrs is associated to the instance of HWAddrTypes which defines the type of hardware address stored in this DeviceHWAddrs instance.
■ To instances of DeviceHWIPAddrs
   An instance of DeviceHWAddrs is associated with zero or more instances of DeviceHWIPAddrs for each IP address that is associated with this instance of DeviceHWAddrs. This association is only used for DeviceHWAddrs that contain the address of NIC hardware.

### Properties

### HWAddr

| Property name | HWAddr |
|---|---|
| Description | "The HWAddr property is the unique identifier for the device parts." |
| Type | String |
| Access | Read |
| Key | Yes |
| Values | 50 Unicode characters |

### DeviceName

| Property name | DeviceName |
|---|---|
| Description | "DeviceName property is the name of the device that holds the device part." |
| Type | String |
| Access | Read |
| Key | No |
| Values | A device name. This is the name of the instance of Devices corresponding to this hardware address. |

### Type

| Property name | Type |
|---|---|
| Description | "Type property is the type of hardware address." |
| Type | String |
| Access | Read |
| Key | No |
| Values | 50 Unicode characters. |

### Unused Properties

The Caption, InstallDate, Name and Status properties are inherited from the parent classes but are currently unused in a current implementation. There are no methods for this object.

### DEVICEHWIPADDRS

This object is not presently used

### JOBINVOCATIONS

There are two categories of Jobs Invocations. A first category is templates. These are Jobs Invocations with RootJobID equal to zero, meaning that these are just templates and not associated with a particular run. The second category of Jobs Invocations are historical, meaning that they are a historical record of a job invocation.

| Class name | JobInvocations |
|---|---|
| Derived from | CIM Job |
| Description | "The JobInvocations class represents either a job template or a previously run job, which is called a job history. Job templates have a value of 0 in RootJobID, while previously run jobs have a non-zero RootJobID." |

Instances of JobInvocations can be created manually or automatically. Job templates are created manually, while Job historical records are created automatically. Instances of JobInvocations can be manually created by the user (or other process). Only job templates may be created (by definition, instances of JobInvocations where RootJobID is zero), and it is an error to try to create a JobInvocations instance with a RootJobID of other than zero. Manually created instances of JobInvocations may later have any of its writable properties changed.

### Automatic Creation (Job Histories)

When a job is executed (using Devices.Execute or Sets.Execute), an instance of JobInvocations is created. This will be given a new unique value of RootJobID (which will not be zero). The properties Name, Command, Parameters and Description of the new instance will be populated with values of the JobInvocationName, Command, Parameters and Description arguments to the Devices.Execute or Sets.Execute method that created the job. The properties TargetName and TargetType will be filled in with the name of the set or device on which the job is being executed, and the type of set or device. Properties of an automatically created JobInvocations instance may not be changed. In WMI, attempting to change a property of a JobInvocations instance will cause the PutInstance (Put_ from script) method to return WBEM_E_FAILED (WbemErrFailed from scriptOnly job templates (instances where RootJobID is zero) and job histories (where RootJobID is non-zero) can both be deleted. If a job history is deleted, all the associated Jobs and JobLogs instances are also deleted. This is implemented in WMI.

### Associations

■ To a single instance of Devices
   An instance of JobInvocations is associated with an instance of Devices if the job template is defined to be run on that device, or if the job history was run on that device. This association exists only if the value of TargetType is Devices, and if so, the association is to the Devices instance with the same name as given in the TargetName property.
■ To a single instance of Sets
   An instance of JobInvocations is associated with an instance of Sets if the job template is defined to be run on that set, or if the job history was run on that set. This association exists only if the value of TargetType is Sets, and if so, the association is to the Sets instance with the same name as given in the TargetName property.
■ To a single instance of Jobs
   An instance of JobInvocations is associated with an instance of Jobs, which gives the results of running the job represented by JobInvocations. This association only exists if the JobInvocations instance is a historical record (that is, RootJobID is non-zero).

### Properties

### RootJobID

| Property name | RootJobID |
|---|---|
| Description | "The RootJobID property works with the Name property to uniquely identify jobs. The RootJobID value is zero for job templates, and nonzero for job histories." |
| Type | 64 bit integer |
| Access | Read |
| Key | Yes |
| Values | 0 = this is a job template non-zero = unique identifier for a previously executed job (assigned by Devices.Execute or Sets.Execute) |

Root job unique identifier. This can be any 64 bit value. If it is zero, it indicates that this JobInvocations instance is a template rather than a historical record for a previous executed job. If this value is non-zero, then this instance is a historical record.

### Name

| Property name | Name |
|---|---|
| Description | "The Name property is the identifier for the JobInvocations object." |
| Type | String |
| Access | Read |
| Key | Yes |
| Values | 50 Unicode characters |

This stores the name of the job as passed as the JobInvocationName argument to Devices.Execute or Sets.Execute.

### TargetName

| Property name | TargetName |
|---|---|
| Description | "Name of the target, such as sets or devices, on which the job was invoked." |
| Type | String |
| Access | Read, Write |
| Key | No |
| Values | 256 Unicode characters |

Target name the job was run on: Devices or Sets.

### TargetType

| Property name | TargetType |
|---|---|
| Description | "Type of the target, such as sets or devices." |
| Type | 32 bit integer |
| Access | Read, Write |
| Key | No |
| Values | 1 = Sets, 2 = Devices |

### Command

| Property name | Command |
|---|---|
| Description | "The job command that is to be executed on the target object." |
| Type | String |
| Access | Read, Write |
| Key | No |
| Values | 1024 Unicode characters |

The command that is invoked on the target.

### Parameters

| Property name | Parameters |
|---|---|
| Description | "Parameters passed to the job command that is to be executed." |
| Type | String |
| Access | Read, Write |
| Key | No |
| Values | 4096 Unicode characters |

The parameters to the command that is invoked.

### Description

| Property name | Description |
|---|---|
| Description | "Description of the job that was invoked." |
| Type | String |
| Access | Read, Write |
| Key | No |
| Values | 256 Unicode characters |

### Unused Properties

The following properties are inherited from the parent classes but are currently unused: Caption, ElapsedTime, InstallDate, Notify, Owner, Priority, StartTime, Status, TimeSubmitted, UntilTime

### Methods

### Rename

| Description | "The rename method renames it to the name specified.X" | |
|---|---|---|
| Arguments: | | |
| InvocationName | (in) String | "The InvocationName input parameter is the name to which the JobInvocations object is to be renamed." |
| Return value: Return value: | void Void | |

### JOBS

The Jobs object captures the topology of a Job Invocation. For example, if the user had a set object and called Execute on that set, then there would be one Jobs Object created as the Root Job and also a Jobs object created for each device of the set. The Root Jobs object is used as the entry into the topological structure of the Jobs. In one implementation only use the parent child relation is used, however, the model is capable of instantiated an N deep tree.

| Class name | Jobs |
|---|---|
| Derived from | CIM LogicalElement |
| Description | "The Jobs class displays the results of an executed job. An instance of this class is created for each job that is run and for each device on which a job is run.." |

Jobs are automatically created by the system, when a job is started (for example, by the methods Sets.Execute or Devices.Execute).

Instances of Jobs cannot be updated. If an instance of Jobs that represents a parent job is deleted, the following are also deleted:
■ The associated JobInvocations instance
■ The child instances of Jobs associated with the Jobs instance
■ The JobLogs instances associated with each of the child Jobs instances

This deletes the record of the job invocation, the status of the job on each device, and the results of the jobs on each device.

Jobs currently in progress can be deleted. If this occurs, any further output from the job received on the controller will not be stored, and no error will be reported.

### Associations

■ To a single instance of JobInvocations
   An instance of Jobs is associated to the instance of JobInvocations that represents the job.
■ To instances of JobLogs
   An instance of Jobs is associated to instances of JobLogs that contain the output from running this job on a particular device. This association only exists if the instance of Jobs represents a single device, rather than a parent instance.
■ To instances of Jobs
   An instance of Jobs is associated to instances of Jobs representing the child processes of the parent Jobs instance. In the current version, only one level of parent-child relationship is supported, where the parent represents a job being run on multiple devices and the children represent the results from individual devices.
■ To a single instance of Devices
   An instance of Jobs is associated to a instance of Devices when the Jobs instance holds the results of running a job on a single device. The association gives the device that the job is run on.

### Properties

### JobID

| Property name | JobID |
|---|---|
| Description | "The JobID property is the unique identifier for the job that has been executed. If the same job executes again, it yields a different identifier." |
| Type | 64 bit integer |
| Access | Read |
| Key | Yes |
| Values | Job unique identifier |

### ParentJobID

| Property name | ParentJobID |
|---|---|
| Description | "The ParentJobID property is the identifier for the job which originates the job on the targets. For the root job, the identifier will be 0 and for other jobs, the identifier uses the identifier of the root job." |
| Type | 64 bit integer |
| Access | Read |
| Key | No |
| Values | Parent job unique identifier |

### DeviceName

| Property name | DeviceName |
|---|---|
| Description | "Name of the device on which the job was run." |
| Type | String |
| Access | Read |
| Key | No |
| Values | Name of device job was run on. |

### StartTime

| Property name | StartTime |
|---|---|
| Description | "Time stamp when task was started." |
| Type | Datetime |
| Access | Read |
| Key | No |
| Values | The time the job was started |

### EndTime

| Property name | EndTime |
|---|---|
| Description | "Time at which this task was completed." |
| Type | Datetime |
| Access | Read |
| Key | No |
| Values | The time the job was completed |

### JobStatus

| Property name | JobStatus |
|---|---|
| Description | "Indicates the status of the task." |
| Type | 32 bit integer |
| Access | Read |
| Key | No. |
| Values | 0 = "Job completed" |
| | 1 = "Job completed with errors" |
| | 2 = "No target to send" |
| | 3 = "Job started" |
| | 4 = "Send completed" |
| | 5 = "Job failed" |
| | 6 = "Job stopped by user" |
| | 7 = "Send failed" |
| | 8 = "Send not started" |
| | 9 = "Uncontrolled device" |
| | 10 = "Inactive device" |
| | 11 = "Job running with errors" |

When the Sets.Execute or Devices.Execute method returns, the value of the status will be one of 2, 3 or 11. If the job cannot be started on any devices, the status is set to 2. If the job cannot be started on some of the devices, the status is set to 11. Otherwise the job was started on all devices, and the status is set to 3.

After the Execute method has returned, the caller can poll the value of the status for the parent Jobs instance. If the job is still running on at least one device, the status will be 3 or 11. If the job has finished on all devices, the status will be 0 or 1. If the job never started on any devices, the status will be 2.

For child jobs, valid values are 0 and 3 through 10. It is initially set to 3 when the child Jobs object is created. If an error occurs running the job, the JobStatus will be updated to one of 5 or 7 to 10. If the job is successfully transmitted to the device, the JobStatus will be set to 4. If the job is stopped by the user calling Jobs.Stop, the JobStatus will be set to 6. If the job completes successfully, JobStatus will be set to 0.

The following properties are inherited from the parent classes but are currently unused: Caption, Description, InstallData, Name and Status.

### Methods

### Stop

| Description: | "The Stop method stops a job that is in progress." | |
|---|---|---|
| Arguments: | None | |
| Return value: | Void | |

This stops a job executing on a device. If it is executed on an instance that represents a parent job, all the child chills that are still running are stopped. A job that was stopped by the user will have a Status property value of 'Job Stopped by User'.

### GetOutput

| Description: | "GetOutput method retrieves the output from the job log and yields the collective result." | |
|---|---|---|
| Arguments: | | |
| OutputType | (in) 32 bit integer | "Type of the output to be retrieved from the JobLogs." |
| Output | (out) String | [See DCR 4988] |
| Return value: | Void | |

The values for OutputType are:
■ 0 = Get exit status
■ 1 = Get standard output
■ 2 = Get standard error
■ 3 = Get all output (in sequence order)
This method is only valid for child Job instances. If OutputType is 0 the exit status is returned in the Output string. For example an exit status of 32 would be returned as the string "32" in Output.

### JOBLOGS

JobLogs capture the output of the execution of a script or executable. The job log is associated with a Jobs. There can be N JobLogs for any Jobs.

| | |
|---|---|
| Class name | JobLogs |
| Derived from | CIM LogicalElement have |
| Description | "The JobLogs class represents the output log for the jobs that already been executed." |

JobLogs are always auto-created by the system, when a job is started (for example, by the methods Sets.Execute or Devices.Execute).

Instances of the JobLogs class cannot be updated, and instances of JobLogs can not be deleted in WMI. Associations are to a single instance of Jobs; an instance of JobLogs is associated with an instance of Jobs giving the device and job which generated this output.

### Properties

### JobID

| Property name | JobID |
|---|---|
| Description | "The JobID property is the unique identifier for the job that has been executed." |
| Type | 64 bit integer |
| Access | Read |
| Key | Yes |
| Values | Jobs unique identifier |

### Sequence

| Property name | Sequence |
|---|---|
| Description | "Sequence of the output from the job that was executed on the device under consideration." |
| Type | 32 bit integer |
| Access | Read |
| Key | Yes |
| Values | Record sequence for a jobs output |

Starts at 1 going up. Same sequence number used for stdout, stderr, exit status.

### LogTime

| Property name | LogTime |
|---|---|
| Description | "Time at which the controller device received output." |
| Type | Datetime |
| Access | Read |
| Key | No |
| Values | |

### OutputType

| Property name | OutputType |
|---|---|
| Description | "The OutputType property specifies the type of output in this instance of JobLogs. It is one of: 0 meaning ExitCode, 1 meaning StdOut,or 2 meaning StdErr." |
| Type | 32 bit integer |
| Access | Read |
| Key | No |
| Values | 0 = "ExitCode" |
| | 1 = "StdOut" |
| | 2 = "StdErr" |

### OutputData

| Property name | OutputData |
|---|---|
| Description | "Output from the job on the device. The sequence property can be used to recreate the output from this job on this device in correct order." |
| Type | String |
| Access | Read |
| Key | No |
| Values | |

These properties are inherited from the parent classes but are currently unused: Caption, Description, InstallDate, Name and Status. There are no methods for this object.

### ALERTS

The device hardware address uniquely identifies a piece of hardware such as a NIC.

| | |
|---|---|
| Class name | Alerts |
| Derived from | CIM LogicalElement |
| Description | "The Alerts class represents a Server Appliance Kit alert on a device." |

The alerts object maintains copies of all the alerts from managed devices which are reporting alerts to the controller. Whether a device reports alerts or not is set using the Devices.EnableAlerts() method. Each instance of the Alerts object represents a single alert from a single device. Alert instances are always created automatically, based on information provided from devices. They cannot be manually created (in WMI).

Instances of this class cannot be updated, and deleting an instance of the alerts class causes the alert to be cleared on the device itself.

Associations are to a single instance of Devices; to the instance of Devices that represents the device on which the alert was created.

### Properties

### DeviceName

| Property name | DeviceName |
|---|---|
| Description | "The device from where the alert is fired." |
| Type | String |
| Access | Read |
| Key | Yes |
| Values | TBD |

This contains the name of the device on which the alert was created.

### Cookie

| Property name | Cookie |
|---|---|
| Description | "Cookie for the alert." |
| Type | 32 bit integer |
| Access | Read |
| Key | Yes |
| Values | TBD |

### AlertType

| Property name | AlertType |
|---|---|
| Description | "Type of the alert." |
| Type | String |
| Access | Read |
| Key | No |
| Values | TBD |

### AlertID

| Property name | AlertID |
|---|---|
| Description | "Identifier of the alert." |
| Type | 32 bit integer |
| Access | Read |
| Key | No |
| Values | TBD |

### AlertLog

| Property name | AlertLog |
|---|---|
| Description | "Name of the alert log." |
| Type | String |
| Access | Read |
| Key | No |
| Values | TBD |

### AlertSource

| Property name | AlertSource |
|---|---|
| Description | "Source of the alert." |
| Type | String |
| Access | Read |
| Key | Yes |
| Values | TBD |

### AlertReplaceString

| Property name | AlertReplaceString |
|---|---|
| Description | "Replacement strings of the alert." |
| Type | String |
| Access | Read |
| Key | No |
| Values | Any length strings |

This is stored in the format as received from the device. At present, this is as a list of values separated by the line feed character (character code 10 decimal). No escaping is performed in case the values contain commas.

### Recei vedTime

| Property name | ReceivedTime |
|---|---|
| Description | "Time at which the alert is fired." |
| Type | Datetime |
| Access | Read |
| Key | No |
| Values | TBD |

This is the time at which the controller received the alert notification from the device.

The following properties are inherited from the parent classes but are currently unused: Caption, Description, InstallDate, Name and Status. There are no methods for this object.

### CONTROLLER

The controller class is used to configure and control the controller. The controller has several global configurable parameters such as heartbeat interval. Additionally, the controller service and sub-services can be started and stopped.

| Class name | Controller |
|---|---|
| Derived from | CIM Configuration |
| Description | "The controller class represents the configuration data store that relates to the controller device." |

This is a singleton class with respect to creation and deletion, and this instance cannot be updated. There are no associations. Properties

### HeartbeatInterval

| Property name | HeartBeatInterval |
|---|---|
| Description | "The HeartbeatInterval property is the heartbeat communication interval between the controlled device and the controller device.." |
| Type Access | String |
| | Read |
| Key Values | No |
| | Number of seconds between heartbeats. |

If not specified, the value 120 seconds (2 minutes) is used. The minimum it can be set to is 60 seconds. The following properties are inherited from the parent classes but are currently unused: Caption, Description and Name.

### Methods

### RefreshDeviceList

| Description | "The RefreshDeviceList method refreshes the list of the devices that have already been detected or manually added. It first clears the list of uncontrolled devices, and then broadcasts multicast SSDP discovery request. Upon receiving the unicast response from the appliances on the network, the method populates the list of appliances." | |
|---|---|---|
| Arguments: | none | |
| Return value: | Void | |

Refresh device list is a two step process. First, uncontrolled devices are removed from the data store. Then a solicited discovery is initiated for devices with the type "Microsoft Server Appliance. The method then returns. At this point, the results of initiating the discovery may not have been received by the controller, so the Devices table may be empty or partially complete.

### SetHeartbeatInterval

| Description | "The SetHeartbeatInterval method sets the interval at which heartbeat communication is to be made." | |
|---|---|---|
| Arguments: | | |
| Interval | (in) 32 bit integer | "The Interval property is the interval in seconds at which the heartbeat communication is to happen." |
| Return value: | Void | |

This updates the heartbeat interval in the Controller.HeartbeatInterval property. It then sends this updated interval out to all the managed devices. The method then returns. It does not wait for status of sending the updated heartbeat to the devices. This value is given in seconds. The minimum it can be set to is 60. If an attempt is made to set it less than 60, the stored value will be set to 60 in one implementation.

Note that if this if this is increased, devices could appear to be not-alive after 1.5*old-heartbeat-interval (the Devices.Alive property will be set to false). In WMI, special classes called association classes are used to link instances of objects. This section defines the association classes used to link the WMI classes that implement the object model.

Association classes are derived from either CIM_Component or CIM_Dependency.

CIM_Component contains the properties GroupComponent and PartComponent to specify the parent instance and child instance respectively. CIM_Dependency contains the properties Antecedent and Dependent to specify the dependency relationship. As described below, the parent class is listed, then the values of the properties (either GroupComponent and PartComponent, or Antecedent and Dependent) are described. No classes add additional properties or override the descriptions or other attributes.

### DEVICEHWADDRTODEVICEHWIPADDR

| | |
|---|---|
| Class name | DeviceHWAddrToDeviceHWIPAddr |
| Derived from | CIM Component |
| Description | <inherited> |

GroupComponent is a reference to an instance of DeviceHWAddrs, PartComponent is a reference to an instance of DeviceHWIPAddrs.

### DEVICEHWADDRTOHWADDRTYPE

| | |
|---|---|
| Class name | DeviceHWAddrToHWAddrType |
| Derived from | CIM Dependency |
| Description | <inherited> |

Antecedent is a reference to an instance of DeviceHWAddrs, Dependent is a reference to an instance of HWAddrTypes.

### DEVICETOALERT

| | |
|---|---|
| Class name | DeviceToAlert |
| Derived from | CIM Dependency |
| Description | <inherited> |

Antecedent is a reference to an instance of Devices, Dependent is a reference to an instance of Alerts.

### DEVICETODEVICEHWADDR

| | |
|---|---|
| name Derived | DeviceToDeviceHWAddr |
| from | CIM Component |
| Class Description | <inherited> |

GroupComponent is a reference to an instance of Devices, PartComponent is a reference to an instance of DeviceHWAddrs.

### DEVICETODEVICETYPE

| | |
|---|---|
| Class name | DeviceToDeviceType |
| Derived from | CIM Dependency |
| Description | <inherited> |

Antecedent is a reference to an instance of Devices, Dependent is a reference to an instance of DeviceTypes.

### DEVICETOJOBINVOCATION

| | |
|---|---|
| Class name | DeviceToJobInvocation |
| Derived from | CIM Dependency |
| Description | <inherited> |

Antecedent is a reference to an instance of Devices, Dependent is a reference to an instance of JobInvocations.

### SETTOJOBINVOCATION

| | |
|---|---|
| Class name | SetToJobInvocation |
| Derived from | CIM Dependency |
| Description | <inherited> |

Antecedent is a reference to an instance of Sets, Dependent is a reference to an instance of JobInvocations.

### DEVICETOJOB

| | |
|---|---|
| Class name | DeviceToJob |
| Derived from | CIM Dependency |
| Description | <inherited> |

Antecedent is a reference to an instance of Devices, Dependent is a reference to an instance of Jobs.

### JOBTOJOB

| | |
|---|---|
| Class name | JobToJob |
| Derived from | CIM Component |
| Description | <inherited> |

GroupComponent is a reference to an instance of Jobs (representing the parent), PartComponent is a reference to an instance of Jobs (for the children).

### JOBINVOCATIONTOJOB

| | |
|---|---|
| Class name | JobInvocationToJob |
| Derived from | CIM Dependency |
| Description | <inherited> |

Antecedent is a reference to an instance of JobInvocations, Dependent is a reference to an instance of Jobs.

### JOBTOJOBLOG

| | |
|---|---|
| Class name | JobToJobLog |
| Derived from | CIM Dependency |
| Description | <inherited> |

Antecedent is a reference to an instance of Jobs, Dependent is a reference to an instance of JobLogs.

### SETTODEVICE

| | |
|---|---|
| Classname | SetToDevice |
| Derived from | CIM Component |
| Description | <inherited> |

GroupComponent is a reference to an instance of Sets, PartComponent is a reference to an instance of Devices.

## Claims

1. A method of operating a computer network including at least one controller computer and at least one node computer, the method comprising:
defining a set by a first computer-executable program (135, 136, 145, 146, 185, 206, 206₁-206ₙ, 208, 210, 218, 218₁-218ₙ, 220, 220₁-220ₙ, 306, 312, 320, 322, 330) interacting with the controller computer, the set comprising a grouping of at least one node computer;
adding at least one of the node computers to the set by a second computer-executable program (135, 136, 145, 146, 185, 206, 206₁-206ₙ, 208, 210, 218, 218₁-218ₙ, 220, 220₁-220ₙ, 306, 312, 320, 322, 330) interacting with the controller computer, wherein said at least one of the node computers is controlled by the controller computer;
storing the set by a third computer-executable program (135, 136, 145, 146, 185, 206, 206₁-206ₙ, 208, 210, 218, 218₁-218ₙ, 220, 220₁-220ₙ, 306, 312, 320, 322, 330) interacting with the controller computer; and
using the set by the controller computer to control each node computer of the set,
**characterized in that**
the set is represented only on the controller computer.

2. The method of claim 1, further comprising removing at least one of the node computers from the set.

3. The method of claim 1 or 2, wherein defining the set comprises identifying a set object.

4. The method of claim 3, wherein adding the node computers to the set comprises calling a method of the set object.

5. The method of one of claims 1 to 4, wherein using the set to control each node computer of the set comprises:
selecting the set; and
instructing the controller computer to perform an operation to the set, the controller computer communicating with each node computer in the set to request performance of the operation.

6. The method of claim 5, further comprising:
at the controller computer, receiving a result of the requested operation from each node computer in the set; and
storing (704) the result.

7. The method of claim 6, further comprising organizing the node computers into logical structures including the set.

8. The method of claim 6 or 7, further comprising analyzing the result.

9. The method of claim 8, wherein analyzing the result indicates the operation failed on a given node computer in the set; and
wherein the method further comprises requesting that performance of the operation be retried on said given node computer in the set.

10. The method of one of claims 1 to 4, further comprising:
maintaining the set by the controller computer;
providing by the controller computer a selection corresponding to at least one of the node computers;
providing (500, 502) by the controller computer a job corresponding to at least one operation to perform on the selection;
sending (510) a message by the controller computer to each node computer in the selection, the message instructing the node computer that receives the message to execute the job; and
by the controller computer, storing (704) results of the job from each node computer in the selection.

11. The method of claim 10, wherein the controller computer maintains at least one set and wherein providing by the controller computer the selection comprises providing data corresponding to at least one set of node computers.

12. The method of claim 10 or 11, wherein providing by the controller computer the job comprises providing data corresponding to a script to run on the selection.

13. The method of claim 10 or 11, wherein providing by the controller computer the job comprises providing data corresponding to a binary program to run on the selection.

14. The method of claim 13, wherein the data corresponding to a binary program to run on the selection comprises a network address.

15. The method of claim 10 or 11, further comprising,
receiving (600) the message at an agent (218, 218₁-218ₙ, 312) on one of the node computers identified in the selection; and
executing (608) the job in response to the message.

16. The method of claim 15, wherein executing the job in response to the message comprises running a script.

17. The method of claim 15, wherein executing the job in response to the message comprises running a binary program.

18. The method of claim 17, wherein running the binary program comprises retrieving the binary program based on a network address in the message.

19. The method of one of claims 1 to 18, further comprising receiving at the controller computer discovery information indicating that one of the node computers is operational so as to be controlled by the controller computer.

20. The method of claim 19, further comprising recognizing that said one of the node computers is already controlled by the controller.

21. The method of claim 19, further comprising:
recognizing that said one of the node computers is not controlled by the controller computer; and
controlling said one of the node computers.

22. The method of claim 21, further comprising adding information identifying said one of the node computers to a storing device maintained by the controller computer.

23. The method of one of claims 19 to 22, further comprising automatically configuring said one of the node computers based on receiving the discovery information.

24. The method of one of claims 10 to 23, wherein storing the results of the job comprises collecting the results in a storage (130, 131, 132, 141, 152, 156, 302).

25. The method of one of claims 10 to 24, wherein storing the results of the job comprises persisting the results.

26. The method of claim 2 or 3, wherein storing the set comprises storing the set object in a schema, the schema configured to enable a plurality of the node computers to be controlled by the controller computer, the schema including:
a plurality of device objects, each device object identifying one of the node computers capable of being controlled by the controller;
at least one set object, each set object identifying a group of at least one node computer identified by one of the device objects; and
a job object, the job object specifying data corresponding to an operation to be executed by each node computer grouped together via a set object.

27. The method of claim 26, wherein the data structure further comprises a job log object, the job log object comprising information corresponding to a result of a job object operation executed by a least one of the node computers identified in the set object.

28. The method of claim 26 or 27, wherein the set object includes a method for adding a device to the set.

29. The method of one of claims 26 to 28, wherein the set object includes a method for removing a device from the set.

30. The method of one of claims 26 to 29, wherein the set object includes a method for running a job on the set.

31. The method of one of claims 26 to 30, wherein the device object includes associations to other objects.

32. The method of one of claims 26 to 31, wherein the data structure further comprises a job invocation object that is created when the job is executed.

33. The method of one of claims 26 to 32, wherein the schema further comprises an alerts object for communicating information from one of the node computers to the controller computer.

34. A system included in a computer network (100, 171, 173), the system comprising:
a controller computer (110, 180, 202);
at least one node computer (110, 180, 204, 204₁-204ₙ);
a first storage device (130, 131, 132, 141, 152, 156, 302) having a first computer-executable program (135, 136, 145, 146, 185, 206, 206₁-206ₙ, 208, 210, 218, 218₁-218ₙ, 220, 220₁-220ₙ, 306, 312, 320, 322, 330) stored thereon configured to interact with the controller computer to define a set representing an organization of the computer network;
a second storage device (130, 131, 132, 141, 152, 156, 302) having a second computer-executable program (135, 136, 145, 146, 185, 206, 206₁-206ₙ, 208, 210, 218, 218₁-218ₙ, 220, 220₁-220ₙ, 306, 312, 320, 322, 330) stored thereon configured to interact with the controller computer to add at least one of the node computers to the set, wherein said added at least one of the node computers is controlled by the controller computer; and
a third storage device (130, 131, 132, 141, 152, 156, 302) having a third computer-executable program (135, 136, 145, 146, 185, 206, 206₁-206ₙ, 208, 210, 218, 218₁-218ₙ, 220, 220₁-220ₙ, 306, 312, 320, 322, 330) stored thereon configured to interact with the controller computer to store the set; and
wherein the controller computer is configured to use the set to control each node computer in the set,
**characterized in that**
the set is represented only on the controller computer.

35. The system of claim 34, wherein the controller computer is configured to receive a selection corresponding to at least one of the node computers;
wherein the node computers identified in the selection include agent software (218, 218₁-218ₙ, 312) connected for communication with controller software (208, 306) on the controller computer; and
wherein the system further comprises:
a job maintained by the controller computer, the job corresponding to at least one operation to perform on the selection;
a transport (212, 214, 214₁-214ₙ, 216) configured to communicate a message containing data corresponding to the job from the controller software to the agent software of the node computers, the message instructing the agent software to execute the job, the agent software of the node computers executing (608) the job and returning (614) results to the controller computer in response to receiving the message; and
a fourth storage device (130, 131, 132, 141, 152, 156, 302) at the controller computer, the controller computer storing the results from the agent software in the fourth storage device.

36. The system of claim 35, further comprising a schema interface (310) configured to provide access to information in the fourth storage device.

37. The system of claim 35 or 36, further comprising an execution engine (320) at the node computers, the agent software communicating with the execution engine to perform the at least one operation corresponding to the job.

38. The system of claim 37, wherein the execution engine comprises a script engine (320), and wherein the agent software communicates with the execution engine to run a script.

39. The system of claim 37, wherein the execution engine comprises software for executing a binary program, and wherein the agent software communicates with the execution engine to run the binary program.

40. The system of one of claims 34 to 39, further comprising software (135, 136, 145, 146, 185, 206, 206₁-206ₙ, 220, 220₁-220ₙ, 218, 218₁-218ₙ, 312, 320, 322, 330) on the node computers that performs a set of at least one operation affecting operation of the software and requested by the controller.

41. The system of claim 40, wherein the set of at least one operation affecting operation of the software comprises a reboot operation.

42. The system of claim 40 or 41, wherein the set of at least one operation affecting operation of the software comprises a suspend operation.

43. The system of one of claims 40 to 42, wherein the set of at least one operation affecting operation of the software comprises a shutdown operation.

44. The system of one of claims 34 to 43, further comprising a discovery listening process at the controller computer that detects discovery information provided by the node computers on the network.

45. The system of claim 44, wherein the controller computer includes software for automatically configuring one of the node computers that provides the discovery information.

46. The system of claim 44 or 45, wherein each node computer includes a discovery component for automatically providing the discovery information.

47. The system of claim 46, wherein each node computer automatically provides the discovery information following a reboot of that node computer.

48. The system of claim 34, configured to perform the method of one of claims 2 to 33.

## Patentansprüche

1. Verfahren zum Betrieb eines Computemetzwerkes, das mindestens einen Controller-Computer und mindestens einen Node- (Knoten) Computer enthält, wobei das Verfahren umfasst:
Definieren eines Sets durch ein erstes computerausführbares Programm (135, 136, 145, 146, 185, 206 206₁ - 206ₙ, 208, 210, 218, 218₁ - 218ₙ, 220, 220₁ - 220ₙ, 306, 312, 320, 322, 330), das mit dem Controller-Computer interagiert, wobei das Set eine Gruppierung mindestens eines Node-Computers umfasst;
Hinzufügen mindestens eines der Node-Computer zu dem Set durch ein zweites computerausführbares Programm (135, 136, 145, 146, 185, 206 206₁ - 206ₙ, 208, 210, 218, 218₁ - 218ₙ, 220, 220₁ - 220ₙ, 306, 312, 320, 322, 330), das mit dem Controller-Computer interagiert, wobei der mindestens eine der Node-Computer durch den Controller-Computer gesteuert wird;
Speichern des Sets durch ein drittes computerausführbares Programm (135, 136, 145, 146, 185, 206 206₁ - 206ₙ, 208, 210, 218, 218₁ - 218ₙ, 220, 220₁ - 220ₙ, 306, 312, 320, 322, 330), das mit dem Controller-Computer interagiert; und
Benutzen des Sets durch den Controller-Computer, um jeden Node-Computer in dem Set zu steuern,
**dadurch gekennzeichnet, dass**
das Set nur auf dem Controller-Computer repräsentiert ist.

2. Verfahren nach Anspruch 1, weiterhin umfassend das Entfernen mindestens eines der Node-Computer aus dem Set.

3. Verfahren nach Anspruch 1 oder 2, wobei das Definieren des Sets ein Identifizieren eines Set-Objekts umfasst.

4. Verfahren nach Anspruch 3, wobei das Hinzufügen des Node-Computers zu dem Set ein Aufrufen einer Methode des Set-Objekts umfasst.

5. Verfahren nach einem der Ansprüche 1 bis 4, wobei das Benutzen des Sets zum Steuern jedes Node-Computers des Sets umfasst:
Auswählen des Sets; und
Instruieren des Controller-Computers, einen Vorgang (operation) an dem Set durchzuführen, wobei der Controller-Computer mit jedem Node-Computer in dem Set kommuniziert, um die Durchführung des Vorgangs anzufordern.

6. Verfahren nach Anspruch 5, weiterhin umfassend:
Empfangen eines Ergebnisses des angeforderten Vorgangs an dem Controller-Computer von jedem Node-Computer in dem Set; und
Speichern (704) des Ergebnisses.

7. Verfahren nach Anspruch 6, weiterhin umfassend das Organisieren der Node-Computer in logische Strukturen, die das Set enthalten.

8. Verfahren nach Anspruch 6 oder 7, weiterhin umfassend das Analysieren des Ergebnisses.

9. Verfahren nach Anspruch 8, wobei das Analysieren des Ergebnisses angibt, dass der Vorgang auf einem gegebenen Node-Computer in dem Set fehlgeschlagen ist; und
wobei das Verfahren ferner das Anfordern umfasst, dass die Durchführung des Vorgangs auf dem gegebenen Node-Computer in dem Set wieder versucht wird.

10. Verfahren nach Anspruch 1 bis 4, weiterhin umfassend:
das Pflegen (maintaining) des Sets durch den Controller-Computer;
das Bereitstellen einer Auswahl, die mindestens einem der Node-Computer entspricht, durch den Controller-Computer;
das Bereitstellen (500, 502) einer Aufgabe (job), die mindestens einem Vorgang entspricht, der auf der Auswahl durchgeführt werden soll, durch den Controller-Computer;
das Senden (510) einer Nachricht durch den Controller-Computer an jeden Node-Computer in der Auswahl, wobei die Nachricht den Node-Computer, der die Nachricht empfängt, instruiert, die Aufgabe auszuführen; und
das Speichern (704) von Ergebnissen der Aufgabe von jedem Node-Computer in der Auswahl durch den Controller-Computer.

11. Verfahren nach Anspruch 10, wobei der Controller-Computer mindestens ein Set pflegt und wobei das Bereitstellen der Auswahl durch den Controller-Computer das Bereitstellen von Daten, die mindestens einem Set von Node-Computern entsprechen, umfasst.

12. Verfahren nach Anspruch 10 oder 11, wobei das Bereitstellen der Aufgabe durch den Controller-Computer das Bereitstellen von Daten, die einem Skript entsprechen, das auf der Auswahl laufen soll, umfasst.

13. Verfahren nach Anspruch 10 oder 11, wobei das Bereitstellen der Aufgabe durch den Controller-Computer das Bereitstellen von Daten, die einem Binärprogramm entsprechen, das auf der Auswahl laufen soll, umfasst.

14. Verfahren nach Anspruch 13, wobei die Daten, die einem Binärprogramm, das auf der Auswahl laufen soll, entsprechen, eine Netzwerkadresse umfassen.

15. Verfahren nach Anspruch 10 oder 11, weiterhin umfassend:
das Empfangen (600) der Nachricht bei einem Vermittler (agent) (218, 218₁ - 218ₙ, 312) auf einem der in der Auswahl identfizierten Node-Computer; und
die Ausführung (608) der Aufgabe in Erwiderung auf die Nachricht.

16. Verfahren nach Anspruch 15, wobei die Ausführung der Aufgabe in Erwiderung auf die Nachricht das Laufenlassen (running) eines Skripts umfasst.

17. Verfahren nach Anspruch 15, wobei die Ausführung der Aufgabe in Erwiderung auf die Nachricht das Laufenlassen eines Binärprogramms umfasst.

18. Verfahren nach Anspruch 17, wobei das Laufenlassen des Binärprogramms das Abrufen (retrieving) des Binärprogramms auf Basis einer Netzwerkadresse in der Nachricht umfasst.

19. Verfahren nach einem der Ansprüche 1 bis 18, weiterhin umfassend das Empfangen von Ermittlungsinformation (discovery information) am Controller-Computer, die angibt, dass einer der Node-Computer betriebsbereit ist, um durch den Controller-Computer gesteuert zu werden.

20. Verfahren nach Anspruch 19, weiterhin umfassend das Erkennen, dass der eine der Node-Computer bereits durch den Controller gesteuert wird.

21. Verfahren nach Anspruch 19, weiterhin umfassend:
das Erkennen, dass der eine der Node-Computer nicht durch den Controller-Computer gesteuert wird; und
das Steuern des einen der Node-Computer.

22. Verfahren nach Anspruch 21, weiterhin umfassend das Hinzufügen von Information, die den einen der Node-Computer identifiziert, zu einem Speichergerät, das durch den Controller-Computer gepflegt (maintained) wird.

23. Verfahren nach einem der Ansprüche 19 bis 22, weiterhin umfassend das automatische Konfigurieren des einen der Node-Computer auf Basis des Empfangens der Ermittlungsinformation.

24. Verfahren nach einem der Ansprüche 10 bis 23, wobei das Speichern der Ergebnisse der Aufgabe das Sammeln der Ergebnisse in einem Speicher (130, 131, 132, 141, 152, 156, 302) umfasst.

25. Verfahren nach einem der Ansprüche 10 bis 24, wobei das Speichern der Ergebnisse der Aufgabe das Fortbestehen (persisting) der Ergebnisse umfasst.

26. Verfahren nach Anspruch 2 oder 3, wobei das Speichern des Sets ein Speichern des Set-Objekts in einem Schema umfasst, wobei das Schema konfiguriert ist, um eine Vielzahl von Node-Computem dazu zu befähigen, durch den Controller-Computer gesteuert zu werden, wobei das Schema enthält:
eine Vielzahl von Geräteobjekten, wobei jedes Geräteobjekt einen der Node-Computer, die in der Lage sind, durch den Controller gesteuert zu werden, identifiziert;
mindestens ein Set-Objekt, wobei jedes Set-Objekt eine Gruppe von mindestens einem Node-Computer, der durch eines der Geräteobjekte identifiziert ist, identifiziert; und
ein Aufgabenobjekt, wobei das Aufgabenobjekt Daten spezifiziert, die einem Vorgang entsprechen, der durch jeden der über ein Set-Objekt zusammen gruppierten Node-Computer ausgeführt werden soll.

27. Verfahren nach Anspruch 26, wobei die Datenstruktur weiterhin ein Aufgaben-Log-Objekt umfasst, wobei das Aufgaben-Log-Objekt Information umfasst, die einem Ergebnis eines Aufgaben-Objekt-Vorgangs entspricht, der durch mindestens einen der in dem Set-Objekt identifizierten Node-Computer ausgeführt wird.

28. Verfahren nach Anspruch 26 oder 27, wobei das Set-Objekt eine Methode zum Hinzufügen eines Geräts zu dem Set enthält.

29. Verfahren nach einem der Ansprüche 26 bis 28, wobei das Set-Objekt eine Methode zum Entfernen eines Geräts aus dem Set enthält.

30. Verfahren nach einem der Ansprüche 26 bis 29, wobei das Set-Objekt eine Methode zum Laufenlassen einer Aufgabe auf dem Set enthält.

31. Verfahren nach einem der Ansprüche 26 bis 30, wobei das Geräte-Objekt Verknüpfungen (associations) mit anderen Objekten enthält.

32. Verfahren nach einem der Ansprüche 26 bis 31, wobei die Datenstruktur weiterhin ein Aufgaben-Aufruf- (invocation) Objekt umfasst, das erstellt wird, wenn die Aufgabe ausgeführt wird.

33. Verfahren nach einem der Ansprüche 26 bis 32, wobei das Schema weiterhin ein Alarm- (alerts) Objekt zum Kommunizieren von Information von einem der Node-Computer an den Controller-Computer umfasst.

34. System, das in einem Computemetzwerk (100, 171, 173) enthalten ist und umfasst:
einen Controller-Computer (110, 180, 202);
mindestens einen Node- (Knoten) Computer (110, 180, 204, 204₁ - 204ₙ);
ein erstes Speichergerät (130, 131, 132, 141, 152, 156, 302), auf dem ein erstes computerausführbares Programm (135, 136, 145, 146, 185, 206 206₁ - 206ₙ, 208, 210, 218, 218₁ - 218ₙ, 220, 220₁ - 220ₙ, 306, 312, 320, 322, 330) gespeichert ist, das dazu konfiguriert ist, mit dem Controller-Computer zu interagieren, um ein Set zu definieren, das eine Organisation des Computemetzwerks darstellt;
ein zweites Speichergerät (130, 131, 132, 141, 152, 156, 302), auf dem ein zweites computerausführbares Programm (135, 136, 145, 146, 185, 206 206₁ - 206ₙ, 208, 210, 218, 218₁ - 218ₙ, 220, 220₁ - 220ₙ, 306, 312, 320, 322, 330) gespeichert ist, das dazu konfiguriert ist, mit dem Controller-Computer zu interagieren, um mindestens einen der Node-Computer zu dem Set hinzuzufügen, wobei der hinzugefügte mindestens eine der Node-Computer durch den Controller-Computer gesteuert wird; und
ein drittes Speichergerät (130, 131, 132, 141, 152, 156, 302), auf dem ein drittes computerausführbares Programm (135, 136, 145, 146, 185, 206 206₁ - 206ₙ, 208, 210, 218, 218₁ - 218ₙ, 220, 220₁ - 220ₙ, 306, 312, 320, 322, 330) gespeichert ist, das dazu konfiguriert ist, mit dem Controller-Computer zu interagieren, um das Set zu speichem;
wobei der Controller-Computer dazu konfiguriert ist, das Set zu benutzen, um jeden Node-Computer in dem Set zu steuern,
**dadurch gekennzeichnet, dass**
das Set nur auf dem Controller-Computer repräsentiert ist.

35. System nach Anspruch 34, wobei der Controller-Computer dazu konfiguriert ist, eine Auswahl zu empfangen, die mindestens einem der Node-Computer entspricht;
wobei die in der Auswahl identifizierten Node-Computer Vermittlersoftware (agent software) (218, 218₁- 218ₙ, 312) enthalten, die verbunden ist, um mit Controller-Software (208, 306) auf dem Controller-Computer zu kommunizieren; und
wobei das System weiterhin umfasst:
eine durch den Controller-Computer gepflegte (maintained) Aufgabe (job), wobei die Aufgabe mindestens einem Vorgang (operation) entspricht, der auf der Auswahl durchgeführt werden soll;
einen Transport (212, 214, 214₁ - 214ₙ, 216), der dazu konfiguriert ist, eine Nachricht von der Controller-Software an die Vermittlersoftware der Node-Computer zu kommunizieren, die Daten enthält, die der Aufgabe entsprechen, wobei die Nachricht die Vermittlersoftware instruiert, die Aufgabe auszuführen, die Vermittlersoftware der Node-Computer die Aufgabe ausführt (608) und Ergebnisse an den Controller-Computer in Erwiderung auf den Empfang der Nachricht zurücksendet (614); und
ein viertes Speichergerät (130, 131, 132, 141, 152, 156, 302) beim Controller-Computer, wobei der Controller-Computer die Ergebnisse von der Vermittlersoftware in dem vierten Speichergerät speichert.

36. System nach Anspruch 35, weiterhin umfassend eine Schemaschnittstelle (310), die dazu konfiguriert ist, Zugang zu Information in dem vierten Speichergerät bereitzustellen.

37. System nach Anspruch 35 oder 36, weiterhin umfassend eine Ausführungsmaschine (execution engine) (320) bei den Node-Computern, wobei die Vermittlersoftware mit der Ausführungsmaschine kommuniziert, um den mindestens einen Vorgang, der der Aufgabe entspricht, durchzuführen.

38. System nach Anspruch 37, wobei die Ausführungsmaschine eine Skriptmaschine (320) umfasst und wobei die Vermittlersoftware mit der Ausführungsmaschine kommuniziert, um ein Skript laufen zu lassen (run).

39. System nach Anspruch 37, wobei die Ausführungsmaschine Software umfasst, um ein Binärprogramm auszuführen, und wobei die Vermittlersoftware mit der Ausführungsmaschine kommuniziert, um das Binärprogramm laufen zu lassen.

40. System nach einem der Ansprüche 34 bis 39, weiterhin umfassend Software (135, 136, 145, 146, 185, 206 206₁ - 206ₙ, 208, 210, 218, 218₁ - 218ₙ, 220, 220₁ - 220ₙ, 306, 312, 320, 322, 330) auf den Node-Computern, die ein Set von mindestens einem Vorgang durchführt, der den Betrieb der Software beeinflusst (affecting) und durch den Controller angefordert wird.

41. System nach Anspruch 40, wobei das Set von mindestens einem Vorgang, der den Betrieb der Software beeinflusst, einen Neustartvorgang (reboot operation) umfasst.

42. System nach Anspruch 40 oder 41, wobei das Set von mindestens einem Vorgang der den Betrieb der Software beeinflusst, einen Aussetzungsvorgang (suspend operation) umfasst.

43. System nach einem der Ansprüche 40 bis 42, wobei das Set von mindestens einem Vorgang, der den Betrieb der Software beeinflusst, einen Vorgang des Herunterfahrens (shutdown operation) umfasst.

44. System nach einem der Ansprüche 34 bis 43, weiterhin umfassend einen Ermittlungslausch- (discovery listening) Prozess beim Controller-Computer, der Ermittlungsinformation (discovery information) detektiert, welche durch die Node-Computer auf dem Netzwerk bereitgestellt wird.

45. System nach Anspruch 44, wobei der Controller-Computer Sofware zum automatischen konfigurieren eines der Node-Computer, der die Ermittlungsinformation bereitstellt, enthält.

46. System nach Anspruch 44 oder 45, wobei jeder Node-Computer eine Ermittlungskomponente zum automatischen Bereitstellen der Ermittlungsinformation enthält.

47. System nach Anspruch 46, wobei jeder Node-Computer automatisch die Ermittlungsinformation in der Folge auf einen Neustart dieses Node-Computers bereitstellt.

48. System nach Anspruch 34, das dazu konfiguriert ist, das Verfahren nach einem der Ansprüche 2 bis 33 durchzuführen.

## Revendications

1. Procédé de mise en oeuvre d'un réseau informatique incluant au moins un ordinateur contrôleur et au moins un ordinateur noeud, le procédé comprenant les opérations consistant à :
définir un ensemble par un premier programme exécutable par un ordinateur (135, 136, 145, 146, 185, 206, 206₁-206ₙ, 208, 210, 218, 218₁-218ₙ, 220, 220₁-220ₙ, 306, 312, 320, 322, 330) interagissant avec l'ordinateur contrôleur, l'ensemble comprenant un regroupement d'au moins un ordinateur noeud ;
ajouter au moins un des ordinateurs noeuds à l'ensemble par un second programme exécutable par un ordinateur (135, 136, 145, 146, 185, 206, 206₁-206ₙ, 208, 210, 218, 218₁-218ₙ, 220, 220₁-220ₙ, 306, 312, 320, 322, 330) interagissant avec l'ordinateur contrôleur, dans lequel ledit au moins un des ordinateurs noeuds est contrôlé par l'ordinateur contrôleur ;
mémoriser l'ensemble par un troisième programme exécutable par un ordinateur (135, 136, 145, 146, 185, 206, 206₁-206ₙ, 208, 210, 218, 218₁-218ₙ, 220, 220₁-220ₙ, 306, 312, 320, 322, 330) interagissant avec l'ordinateur contrôleur ; et
utiliser l'ensemble par l'ordinateur contrôleur pour contrôler chacun des ordinateurs noeuds de l'ensemble,
**caractérisé en ce que**
l'ensemble n'est représenté que sur l'ordinateur contrôleur.

2. Procédé selon la revendication 1, comprenant en outre l'élimination d'au moins un des ordinateurs noeuds de l'ensemble.

3. Procédé selon la revendication 1 ou 2, dans lequel la définition de l'ensemble comprend l'identification d'un objet ensemble.

4. Procédé selon la revendication 3, dans lequel l'ajout des ordinateurs noeuds à l'ensemble comprend l'appel d'une méthode de l'objet ensemble.

5. Procédé selon l'une quelconque des revendications 1 à 4, dans lequel l'utilisation de l'ensemble pour contrôler chacun des ordinateurs noeuds de l'ensemble comprend les opérations consistant à :
sélectionner l'ensemble ; et
ordonner à l'ordinateur contrôleur la mise en oeuvre d'une opération sur l'ensemble, l'ordinateur contrôleur communiquant avec chacun des ordinateurs noeuds de l'ensemble pour demander la mise en oeuvre de l'opération.

6. Procédé selon la revendication 5, comprenant en outre les opérations consistant à :
sur l'ordinateur contrôleur, recevoir un résultat de l'opération demandée, provenant de chacun des ordinateurs noeuds de l'ensemble ; et
mémoriser (704) le résultat.

7. Procédé selon la revendication 6, comprenant en outre l'organisation des ordinateurs noeuds en structures logiques incluant l'ensemble.

8. Procédé selon la revendication 6 ou 7, comprenant en outre l'analyse du résultat.

9. Procédé selon la revendication 8, dans lequel l'analyse du résultat indique que l'opération a échoué sur un ordinateur noeud donné de l'ensemble ; et
dans lequel le procédé comprend en outre la demande d'une nouvelle tentative de mise en oeuvre de l'opération sur ledit ordinateur noeud donné de l'ensemble.

10. Procédé selon l'une quelconque des revendications 1 à 4, comprenant en outre les opérations consistant à :
maintenir l'ensemble par l'ordinateur contrôleur ;
mettre à disposition par l'ordinateur contrôleur une sélection correspondant à au moins un des ordinateurs noeuds ;
mettre à disposition (500, 502) par l'ordinateur contrôleur une tâche correspondant à au moins une opération à mettre en oeuvre sur la sélection ;
émettre (510) un message par l'ordinateur contrôleur vers chaque ordinateur noeud de la sélection, le message ordonnant à l'ordinateur noeud qui reçoit le message d'exécuter la tâche ; et
par l'ordinateur contrôleur, mémoriser (704) les résultats de la tâche provenant de chacun des ordinateurs noeuds de la sélection.

11. Procédé selon la revendication 10, dans lequel l'ordinateur contrôleur maintient au moins un ensemble et dans lequel la mise à disposition par l'ordinateur contrôleur de la sélection comprend la mise à disposition de données correspondant à au moins un ensemble d'ordinateurs noeuds.

12. Procédé selon la revendication 10 ou 11, dans lequel la mise à disposition par l'ordinateur contrôleur de la tâche comprend la mise à disposition de données correspondant à un script à exécuter sur la sélection.

13. Procédé selon la revendication 10 ou 11, dans lequel la mise à disposition par l'ordinateur contrôleur de la tâche comprend la mise à disposition de données correspondant à un programme binaire à exécuter sur la sélection.

14. Procédé selon la revendication 13, dans lequel les données correspondant à un programme binaire à exécuter sur la sélection comprennent une adresse de réseau.

15. Procédé selon la revendication 10 ou 11, comprenant en outre les opérations consistant à :
recevoir (600) le message sur un agent (218, 218₁-218ₙ, 312) sur l'un des ordinateurs noeuds identifiés dans la sélection ; et
exécuter (608) la tâche en réponse au message.

16. Procédé selon la revendication 15, dans lequel l'exécution de la tâche en réponse au message comprend l'exécution d'un script.

17. Procédé selon la revendication 15, dans lequel l'exécution de la tâche en réponse au message comprend l'exécution d'un programme binaire.

18. Procédé selon la revendication 17, dans lequel l'exécution du programme binaire comprend la récupération du programme binaire en se basant sur une adresse de réseau contenue dans le message.

19. Procédé selon l'une quelconque des revendications 1 à 18, comprenant en outre la réception sur l'ordinateur contrôleur d'informations de découverte indiquant que l'un des ordinateurs noeuds est opérationnel pour en permettre le contrôle par l'ordinateur contrôleur.

20. Procédé selon la revendication 19, comprenant en outre la recognition que ledit un des ordinateurs noeuds est déjà contrôlé par le contrôleur.

21. Procédé selon la revendication 19, comprenant en outre les opérations consistant à :
reconnaître le fait que ledit un des ordinateurs noeuds n'est pas contrôlé par l'ordinateur contrôleur ; et
contrôler ledit un des ordinateurs contrôlés.

22. Procédé selon la revendication 21, comprenant en outre l'ajout d'informations identifiant le dit un des ordinateurs noeuds à un dispositif de stockage maintenu par l'ordinateur contrôleur.

23. Procédé selon l'une quelconque des revendications 19 à 22, comprenant en outre la configuration automatique dudit un des ordinateurs noeuds en se basant sur la réception des informations de découverte.

24. Procédé selon l'une quelconque des revendications 10 à 23, dans lequel la mémorisation des résultats de la tâche comprend la collecte des résultats dans un dispositif de stockage (130, 131, 132, 141, 152, 156, 302).

25. Procédé selon l'une quelconque des revendications 10 à 24, dans lequel la mémorisation des résultats de la tâche comprend la conservation des résultats.

26. Procédé selon la revendication 2 ou 3, dans lequel le stockage de l'ensemble comprend le stockage de l'objet ensemble dans un schéma, le schéma étant configuré pour permettre le contrôle d'une pluralité des ordinateurs noeuds par l'ordinateur contrôleur, le schéma incluant :
une pluralité d'objets dispositifs, chacun des objets dispositifs identifiant un des ordinateurs noeuds susceptibles d'être contrôlés par le contrôleur ;
au moins un objet ensemble, chacun des objets ensembles identifiant un groupe d'au moins un ordinateur noeud identifié par l'un des objets dispositifs ; et
un objet tâche, l'objet tâche définissant des données correspondant à une opération destinée à être exécutée par chacun des ordinateurs noeuds regroupés via un objet ensemble.

27. Procédé selon la revendication 26, dans lequel la structure de données comprend en outre un objet de journal de tâches, l'objet de journal de tâches comprenant des informations correspondant à un résultat d'une opération d'objet de tâche exécutée par au moins un des ordinateurs noeuds identifiés dans l'objet ensemble.

28. Procédé selon la revendication 26 ou 27, dans lequel l'objet ensemble comprend un procédé destiné à ajouter un dispositif à l'ensemble.

29. Procédé selon l'une quelconque des revendications 26 à 28, dans lequel l'objet ensemble comprend un procédé destiné à éliminer un dispositif de l'ensemble.

30. Procédé selon l'une quelconque des revendications 26 à 29, dans lequel l'objet ensemble comprend un procédé d'exécution d'une tâche sur l'ensemble.

31. Procédé selon l'une quelconque des revendications 26 à 30, dans lequel l'objet dispositif comprend des associations avec d'autres objets.

32. Procédé selon l'une quelconque des revendications 26 à 31, dans lequel la structure de données comprend en outre un objet invocation de tâche qui est créé lorsque la tâche est exécutée.

33. Procédé selon l'une quelconque des revendications 26 à 32, dans lequel le schéma comprend en outre un objet alertes destiné à communiquer des informations provenant d'un des ordinateurs noeuds à l'ordinateur contrôleur.

34. Système inclus dans un réseau informatique (100, 171, 173), ce système comprenant :
un ordinateur contrôleur (110, 180, 202) ;
au moins un ordinateur noeud (110, 180, 204, 204₁-204ₙ) ;
un premier dispositif de stockage (130, 131, 132, 141, 152, 156, 302), ayant un premier programme exécutable par ordinateur (135, 136, 145, 146, 185, 206, 206₁-206ₙ, 208, 210, 218, 218₁-218ₙ, 220, 220₁-220ₙ, 306, 312, 320, 322, 330) qui y est mémorisé, configuré pour interagir avec l'ordinateur contrôleur afin de définir un ensemble représentant une organisation du réseau informatique ;
un second dispositif de stockage (130, 131, 132, 141, 152, 156, 302), ayant un second programme exécutable par ordinateur (135, 136, 145, 146, 185, 206, 206₁-206ₘ, 208, 210, 218, 218₁-218ₙ, 220, 220₁-220ₙ, 306, 312, 320, 322, 330) qui y est mémorisé, configuré pour interagir avec l'ordinateur contrôleur afin d'ajouter au moins un des ordinateurs noeuds à l'ensemble, dans lequel ledit un des ordinateurs noeuds ajouté est contrôlé par l'ordinateur contrôleur ; et
un troisième dispositif de stockage (130, 131, 132, 141, 152, 156, 302), ayant un troisième programme exécutable par ordinateur (135, 136, 145, 146, 185, 206, 206₁-206ₘ, 208, 210, 218, 218₁-218ₙ, 220, 220₁-220ₙ, 306, 312, 320, 322, 330) qui y est mémorisé, configuré pour interagir avec l'ordinateur contrôleur afin de mémoriser l'ensemble ; et
dans lequel l'ordinateur contrôleur est configuré pour utiliser l'ensemble afin de contrôler chacun des ordinateurs noeuds de l'ensemble,
**caractérisé en ce que**
l'ensemble n'est représenté que sur l'ordinateur contrôleur.

35. Système selon la revendication 34, dans lequel l'ordinateur contrôleur est configuré pour recevoir une sélection correspondant à au moins un des ordinateurs noeuds ;
dans lequel l'ordinateur noeud identifié dans la sélection comprend un logiciel agent (218, 218₁-218ₙ, 312) relié pour communiquer avec un logiciel contrôleur (208, 306) sur l'ordinateur contrôleur ; et
dans lequel le système comprend en outre :
une tâche maintenue par l'ordinateur contrôleur, la tâche correspondant à au moins une opération à mettre en oeuvre sur la sélection ;
un transport (212, 214, 214₁-214ₙ, 216) configuré pour communiquer un message contenant des données correspondant à la tâche du logiciel contrôleur vers le logiciel agent des ordinateurs noeuds, le message ordonnant au logiciel agent d'exécuter la tâche, le logiciel agent des ordinateurs noeuds exécutant (608) la tâche et renvoyant (614) des résultats à l'ordinateur contrôleur en réponse à la réception du message ; et
un quatrième dispositif de stockage (130, 131, 132, 141, 152, 156, 302) sur l'ordinateur contrôleur, l'ordinateur contrôleur stockant les résultats provenant du logiciel agent dans le quatrième dispositif de stockage.

36. Système selon la revendication 35, comprenant en outre une interface de schéma (310) configurée pour mettre à disposition l'accès à des informations dans le quatrième dispositif de stockage.

37. Système selon la revendication 35 ou 36, comprenant en outre un moteur d'exécution (320) sur les ordinateurs noeuds, le logiciel agent communiquant avec le moteur d'exécution pour mettre en oeuvre ladite au moins une opération correspondant à la tâche.

38. Système selon la revendication 37, dans lequel le moteur d'exécution comprend un moteur de script (320) et dans lequel le logiciel agent communique avec le moteur d'exécution pour exécuter un script.

39. Système selon la revendication 37, dans lequel le moteur d'exécution comprend un logiciel permettant d'exécuter un programme binaire, et dans lequel le logiciel agent communique avec le moteur d'exécution pour exécuter le programme binaire.

40. Système selon l'une des revendications 34 à 39, comprenant en outre un logiciel (135, 136, 145, 146, 185, 206, 206₁-206ₙ, 220, 220₁-220ₙ, 218, 218₁-218ₙ, 312, 320, 322, 330) sur les ordinateurs noeuds qui met en oeuvre un ensemble d'au moins une opération affectant le fonctionnement du logiciel et demandée par le contrôleur.

41. Système selon la revendication 40, dans lequel l'ensemble d'au moins une opération affectant le fonctionnement du logiciel comprend une opération de réamorçage.

42. Système selon la revendication 40 ou 41, dans lequel l'ensemble d'au moins une opération affectant le fonctionnement du logiciel comprend une opération d'interruption.

43. Système selon l'une des revendications 40 à 42, dans lequel l'ensemble d'au moins une opération affectant le fonctionnement du logiciel comprend une opération d'arrêt.

44. Système selon l'une des revendications 34 à 43, comprenant en outre un processus de découverte sur l'ordinateur contrôleur qui détecte les informations de découverte mises à disposition par les ordinateurs noeuds sur le réseau.

45. Système selon la revendication 44, dans lequel l'ordinateur contrôleur comprend un logiciel destiné à configurer automatiquement un des ordinateurs noeuds qui met à disposition les informations de découverte.

46. Système selon la revendication 44 ou 45, dans lequel chacun des ordinateurs noeuds comprend un composant de découverte destiné à mettre à disposition automatiquement les informations de découverte.

47. Système selon la revendication 46, dans lequel chacun des ordinateurs noeuds met à disposition automatiquement les informations de découverte suite à un réamorçage de cet ordinateur noeud.

48. Système selon la revendication 34, configuré pour mettre en oeuvre le procédé selon l'une quelconque des revendications 2 à 33.
